# EUROPEAN PATENT SPECIFICATION

(11) **EP 3 505 880 B1**
(45) Date of publication and mention of the grant of the patent: **29.06.2022**
(21) Application number: 18397535.8
(22) Date of filing: 20.12.2018
(51) Int. Cl.: G01G 19/42, G06Q 10/00, B07C 5/34, B65F 1/14, G06Q 10/08, C09J 7/40

(54) **COLLECTING OF SPENT LABELSTOCK MATERIAL**
SAMMELN VON VERBRAUCHTEM ETIKETTENMATERIAL
COLLECTE DE COMPLEXES ADHÉSIFS USAGÉS

(30) Priority: 29.12.2017 FI 20176204
(43) Date of publication of application: 03.07.2019
(73) Proprietor: UPM Raflatac Oy, 33310 Tampere (FI)
(72) Inventor: Manninen, Samuli, 00180 Helsinki (FI); Søndergaard, Claus, 4600 Køge (DK); Virmavirta, Juha, 33500 Tampere (FI)
(74) Representative: Berggren Oy

(56) References cited:
- EP-A1- 2 524 015
- EP-A1- 3 046 097
- WO-A1-2015/019062
- WO-A1-2017/007913
- US-A1- 2015 007 943

## Description

### FIELD

The present invention relates to collecting of spent labelstock material.

### BACKGROUND

A label roll comprises a plurality of adhesive labels supported on a release liner. The release liner may comprise e.g. paper coated with a release agent. The adhesive labels may be transferred from the release liner to a plurality of items. The release liner is typically handled as waste after the adhesive labels have been separated from the release liner.

WO2017/007913 discloses a system for tracking waste or recyclable material, the system comprising: a label for a batch of material generated at an originating site, the label being associated with at least one of the material and any container for the material at the originating site, the label comprising an identifier including at least one of information identifying the originating site and information about the material; a label reader at a material handling site that is remote from the originating site and is capable of reading the identifier on the label, the label reader associated with a communications facility for communicating information to a server.

WO2015/019062 discloses a release liner for use in adhesive labelling or packaging film, the release liner comprising a substrate layer and a skin layer, which has a nano-coating of a release compound thereon.

US 2015-007943 discloses a label, comprising a face stock, an adhesive layer and a release liner.

EP2524015 disclose a process for producing a release liner from spent liner stock, which comprises polyethylene terephthalate polymer and which is reduced into chips.

EP 3046097 discloses a label assembly comprising a top layer, repositionable adhesive covering the entirety of the back side of the top layer; and a siliconefree liner contacting the repositionable adhesive to sandwich the repositionable adhesive between the top layer and the liner.

### SUMMARY

An object is to provide a method for collecting spent labelstock material.

According to an aspect, there is provided a method according to claim 1.

Further aspects are defined in the dependent claims.

The scope of protection sought for various embodiments of the invention is set out by the independent claim. Embodiments that do not fall under the scope of the independent claim are to be interpreted as examples useful for understanding various embodiments of the invention.

A high number of items may be labeled at different geographical locations. Labels may be provided such that the labels are temporarily supported on a release liner. The labels may be transferred from the release liner to the items. Thus, the labeling operations may provide a high amount of used release liner material. The release liner material may be collected to containers after the labels have been separated from the release liner.

Spent labelstock material may be collected to containers during and/or after the labeling operations.

At a labeling site, one or more open containers may be positioned near a production line. When a container becomes full, it is closed and transferred to a storage. A filled container may be transferred to the storage such that it is replaced with another empty container

Containers filled with the spent labelstock material are stored in several different storages at the different geographical locations. The containers are transported from the storages to a collecting terminal by one or more vehicles. The containers are moved from the storages to one or more collecting vehicles according to predicted fill ratios of the storages and according to one or more optimization criteria. The material may subsequently be subsequently utilized for one or more useful purposes. The collected labelstock material may be subsequently reused e.g. as raw material for making new products.

A control system is configured to control storage and transportation of the spent labelstock material based on codes attached to the containers.

The method comprises associating each container (or a stack of containers) with a different code. Each container (or a stack of containers) may be associated with a unique code.

The container is stored in a storage. The container may be added to the inventory of the storage e.g. by reading the code of the container with a portable reader device. When the unique code is scanned at a customer location (e.g. at the location of a storage), the unique identification code is added to the inventory of a storage at that customer location. The system may be arranged to operate such that the unique identification code is added to the inventory of a storage only once. The system may be configured to monitor status of several storages at different geographical locations, and the inventory of each storage is updated by reading the codes.

In particular, a portable device may be configured to ask the weight of the container (or the weight of a stack of containers). A user may measure the weight of the container (or stack) at the storage, and the user may subsequently feed the measured weight to a database e.g. by using a user interface of a portable reading device. The measured weight is stored in the database such that the measured weight may be retrieved from the database based on the code. A weight measuring device (balance) may be configured to send a measured weight to a portable device of a user and/or to a server. The user of the device may e.g. accept or reject the measured weight.

Each container may have a unique machine-readable code. The code may be e.g. a two-dimensional data code (e.g. QR code, Quick Response Code or any type of data matrix code). The code may be e.g. a one-dimensional data code such as a barcode. The code may be e.g. printed directly on the surface of a container. The code may be e.g. printed on a label, which is attached to the container. The code may be read e.g. by capturing an image of the code by using an optical device such as camera, and analyzing the captured image or the code may be read using an optical scanner, such as a laser based scanner. In case of a one-dimensional data code, the code may be read by using an optical bar code scanner or by capturing an image of the code.

The code may be visually detectable. For example, a barcode and an alphanumerical code may be both machine-readable and visually detectable. Visually detectable may mean that an operating person may easily detect the presence, the position, or even the data of the code with naked eyes. In case of a visually detectable code, the user of a reader device may easily detect the location of the code and may easily select which code from a plurality of codes is read by a reading device. In other words, the risk of reading a wrong code may be reduced.

A two-dimensional data code, such as a QR code may optionally comprise an embedded visual image. The embedded visual image may be e.g. a logo or a symbol. The logo may represent e.g. a company, which manufactures labelstock and/or which operates the collection terminal. The two-dimensional data code may comprise a visually recognizable image in addition to the machine-readable data. The benefit of such code with both machine-readable data and visual information for a human person is that the human understands what application or service is related to that code. The container might have for example several bar codes but the operator when seeing the image embedded in the data code understands that this code is for the material collecting service.

The code may also be e.g. an identification code stored in a memory of an RFID tag, wherein the RFID tag may be attached to the container. RFID means radio frequency identification. The RFID tag may be of active or passive type, e.g. containing internal power source or powered by the external reader field.

The RFID tag may further be operating in low frequency (LF), high frequency (HF), or ultra-high frequency (UHF) bands. The RFID tag may further be readable from a distance or it may be a so-called Near Field Communication (NFC) tag readable only from a short distance.

The control system is configured to monitor the status of storages, to predict the status of the storages, and to determine an optimum pick up time for moving containers from a storage to a collecting vehicle. The control system may be configured to determine an optimum route for collecting containers from several different storages to the same vehicle on the same working day. The control system utilizes a prediction model for estimating the fill ratio of each storage in the future. The control system may utilize an optimization algorithm to optimize the route and the pick-up time, according to one or more optimization criteria. The control system is configured to indicate the recommended pick-up time to a user. In particular, the control system may be configured to send a message to a portable device of a driver of the collecting vehicle, wherein the message may specify the determined pick-up time and/or route. The control system may be configured to send an electronic notification to a device of the driver of the vehicle, the notification specifying the determined pick-up time and/or route.

The optimum pick-up time may be determined e.g.:
- based on the predicted fill ratios of the storages,
- based on minimizing the total cost/time of the pick-up vehicle operations,
- based on a desired flow of material to the collecting terminal, and/or
- based on a desired amount of material stored at the collecting terminal.

The method may e.g. allow reduction of storage costs. The method may e.g. allow reduction of transport costs. The method may e.g. ensure continuous operation of a production facility.

When determining the optimum pick-up time based on the predicted fill ratios of the storages, all storages may be considered to be equal importance. Alternatively, when determining the optimum pick-up time based on the predicted fill ratios of the storages, one or more storages may be given a higher priority than the other storages. When a storage is given a higher priority, this may mean that overfilling of said storage is forbidden. The prediction of the fill ratio of a storage may involve a certain risk that the prediction is erroneous. The magnitude of the risk may be controlled by selecting the optimum pick up time. An early pick-up time may reduce the risk, and a late pick-up time may increase the risk. The optimum pick-up time may be determined such that the risk of overfilling a high priority storage is below a predetermined limit (e.g. smaller than 5%). When a storage is given a lower priority, this may mean that overfilling said storage may (sometimes) be allowed.

Selecting an early pick-up time may mean that a collecting vehicle must visit the storage more frequently, which in turn may increase the transportation costs. Selecting a late pick-up time may mean that the collecting vehicle may visit the storage less frequently, which in turn may reduce the transportation costs. The optimum pick-up time may be determined so as to reduce the transport costs while keeping the risk of overfilling below a predetermined level.

In case of a high priority storage, overfilling should be avoided. The pick-up date for the high priority storage may also be selected such that the predicted fill ratio of the high priority storage is lower than or equal to 100% on the determined pick-up date. The pick-up date for the high priority storage may also be selected such that the predicted fill ratio of the high priority storage is substantially lower than 100% on the determined pick-up date.

In case of a low priority storage, overfilling may sometimes be allowed. The pick-up date for the low priority storage may also be selected such that the predicted fill ratio of the low priority storage is higher than 100% on the determined pick-up date.

The time interval between determining the optimum pick-up time and the determined pick up time may be e.g. greater than or equal to two days (48 h). The time interval between sending the (first) notification and the determined optimum pick-up time may be e.g. greater than or equal to two days.

The containers are moved to the collecting vehicle according to the determined pick-up time. The containers are transported from the storages to the collecting terminal according to the determined pick-up time.

The codes may be read at the collecting terminal. The contents of containers associated with the codes (read at the terminal) may be added to the inventory of the collecting terminal. Containers associated with the codes (read at the terminal) may be (finally) removed from an inventory of a customer.

Operation of a labeling facility may be controlled e.g. by using a production planning system. Operation of a labeling facility may be controlled e.g. by using production planning data. The prediction model may optionally utilize the production planning data for predicting the fill ratio of the storage associated with the labeling facility. The production planning data may comprise e.g. data, which indicates the amounts of new labelstock delivered to the labeling site and/or the delivery dates of the new labelstock. One or more parameters of the production planning system may be correlated with the flow rate of spent labelstock from the labeling facility to the storage.

The collected material may be re-used e.g. for producing new release liner material, for producing paper, for producing processed raw material, and/or for producing composite material. A flow of collected material needed for the production may be predicted by using a (second) production planning system. Operation of the production facility may be controlled e.g. by using (second) production planning data of the production facility. One or more parameters of the (second) production planning system may be correlated with the flow of collected material needed for the production. The prediction model may utilize production planning data, which may directly or indirectly indicate e.g. the how much and when the collected material will be need for the production. The prediction model may be linked with the production planning system of the production facility e.g. in order to determine how much and when the collected material will be needed to the production, and/or in order to determine what would be a suitable fill ratio of the collection bin of the collecting terminal, in order to ensure proper operation of the production facility.

The term "labelstock" may mean the combination of label face material, adhesive, and the release liner. The release liner may comprise paper based on cellulose fibers. The release liner may comprise paper based on natural fibers. The release liner may comprise filmic polymer material. The face material may comprise paper based on cellulose fibers. The face material may comprise paper based on natural fibers. The face material may comprise filmic polymer material.

The term "labelstock material" may mean the release liner and/or the label face material. The label face material of the labelstock material may comprise adhesive.

### BRIEF DESCRIPTION OF THE DRAWINGS

In the following examples, several variations will be described in more detail with reference to the appended drawings, in which
- Fig. 1a: shows, by way of example, in a three-dimensional view, labeling of items with labels, which are supported on a release liner,
- Fig. 1b: shows, by way of example, release liner material collected to a container,
- Fig. 2a: shows, by way of example, collecting spent labelstock material to containers and storing the containers in a storage,
- Fig. 2b: shows, by way of example, moving containers from a storage to a vehicle,
- Fig. 2c: shows, by way of example, receiving containers from the vehicle at a collection terminal,
- Fig. 3: shows, by way of example, a control system,
- Fig. 4: shows method steps for collecting spent labelstock material from storages to a terminal,
- Fig. 5a: shows method steps for determining a collection plan,
- Fig. 5b: shows method steps for determining a collection plan,
- Fig. 5c: shows method steps for determining a collection plan,
- Fig. 6: shows, by way of example, a collection route,
- Fig. 7: shows, by way of example, fill ratios of storages,
- Fig. 8a: shows, by way of example, temporal evolution of flow of material to a storage, and the corresponding temporal evolution of the fill ratio of the storage,
- Fig. 8b: shows, by way of example, temporal evolution of fill ratios of storages,
- Fig. 8c: shows, by way of example, temporal evolution of fill ratio of a material bin of the collecting terminal,
- Fig. 9: shows, by way of example, a correlation between delivery data and fill ratio of a storage,
- Fig. 10a: shows, by way of example, a displayed view when confirming a measured weight value,
- Fig. 10b: shows, by way of example, a displayed view for indicating determined a pick-up time and a determined route,
- Fig. 10c: shows, by way of example, a displayed view for confirming removal of a container from the storage,
- Fig. 10d: shows, by way of example, a displayed view for inputting a value of a quality indicator,
- Fig. 11a: shows, by way of example, a displayed view for indicating fill ratios of storages,
- Fig. 11b: shows, by way of example, a displayed view for selecting an optimization criterion,
- Fig. 12: shows method steps for associating several containers with the same measured weight of a stack,
- Fig. 13a: shows, by way of example, a displayed view for selecting a weighing mode,
- Fig. 13b: shows, by way of example, a displayed view for reading a code associated with a measured weight,
- Fig. 13c: shows, by way of example, a displayed view for reading a further code associated with a measured weight,
- Fig. 13d: shows, by way of example, a displayed view for reading a code associated with a measured weight of a second stack,
- Fig. 14a: shows, by way of example, producing new release liner from collected release liner material,
- Fig. 14b: shows, by way of example, producing paper from collected release liner material,
- Fig. 14c: shows, by way of example, producing polymer material by processing collected spent labelstock material,
- Fig. 14d: shows, by way of example, producing composite material from collected spent labelstock material,
- Fig. 15a: shows, by way of example, in a three-dimensional view, filling a container with spent labelstock material, which comprises release liner material and face material, and
- Fig. 15b: shows, by way of example, in a three-dimensional view, filling a container with spent labelstock material, which comprises labels attached to release liner.

### DETAILED DESCRIPTION

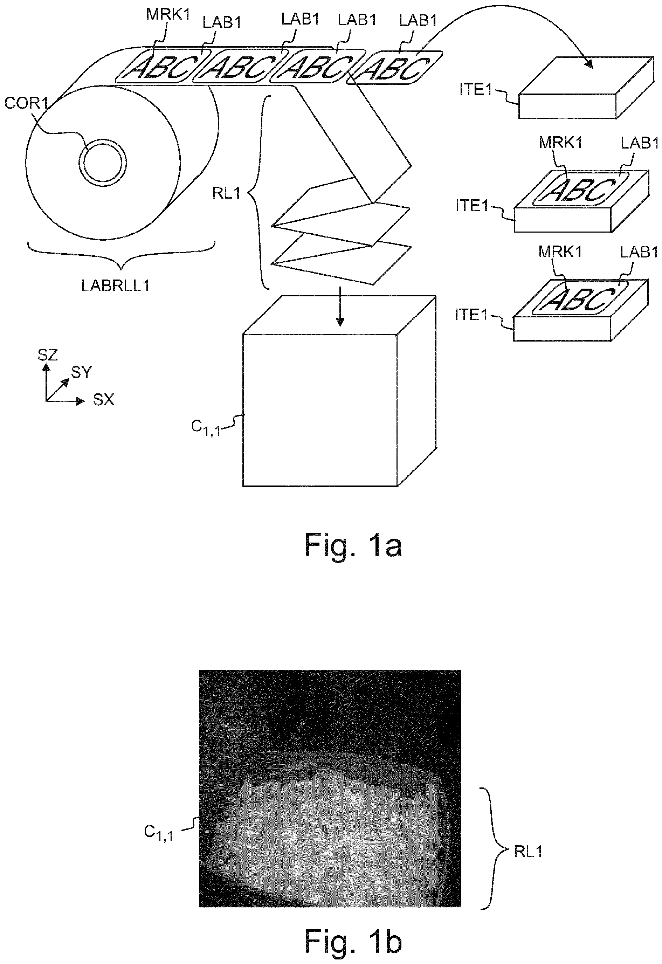

Referring to Fig. 1a, a label roll LABRLL1 may comprise a plurality labels LAB1 supported on a release liner RL1. The labels LAB1 may be separated from the release liner material RL1, and the labels may be attached to items ITE1 so as to form labeled items. The labels LAB1 may comprise e.g. pressure sensitive adhesive (PSA), and the labels LAB1 of the roll LABRLL1 may be removably attached to the release liner material RL1.

The release liner material RL1 may comprise e.g. paper and/or plastic, which has been coated with a release agent in order to facilitate separation of the labels from the release liner material RL1. The release liner material RL1 may comprise e.g. Super Calendered Kraft paper (SKC). The release liner material RL1 may comprise comprise e.g. material known as "Glassine". Glassine means Super Calendered Kraft paper (SKC), which comprises a polyvinyl alcohol coating. The release liner material RL1 may comprise cellulose fibers. The release liner material RL1 may further comprise silicone to facilitate separation of the labels from the release liner material RL1.

The release liner material RL1 may be subsequently collected to a container (e.g. C_{1,1}), after a plurality of labels has been separated from the release liner material RL1. The material may be e.g. folded, rolled and/or compressed so as to increase the effective density of the contents of the container.

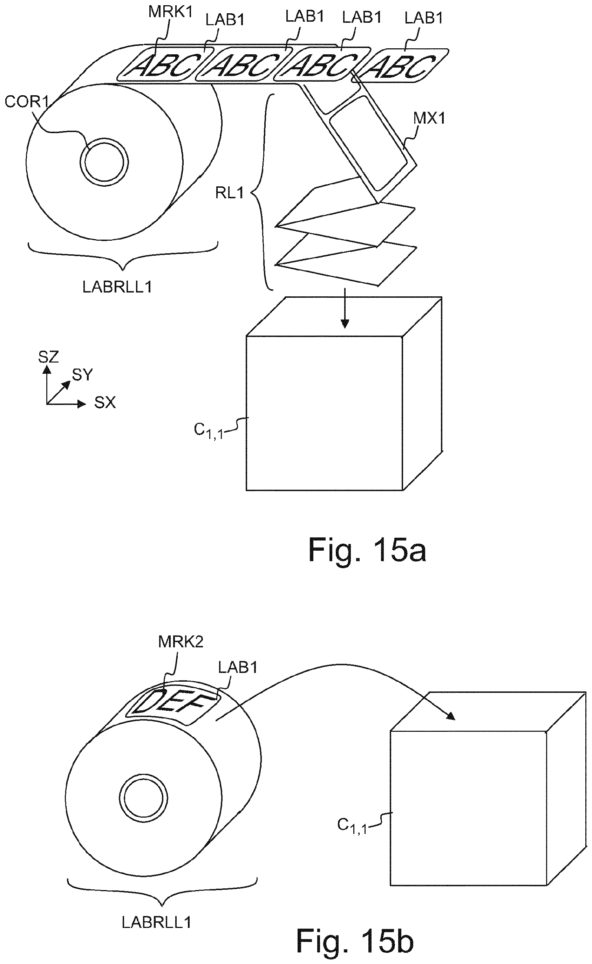

The label roll LABRLL1 may further comprise label matrix MX1 (Fig. 15a). The label matrix MX1 may comprise face stock material. The label matrix MX1 may be formed e.g. when the labels LAB1 are from a continuous face stock web by die-cutting.

SX, SY and SZ denote orthogonal directions.

Fig. 1b shows release liner material RL1 collected to a container C_{1,1}. The container may be e.g. a cardboard box.

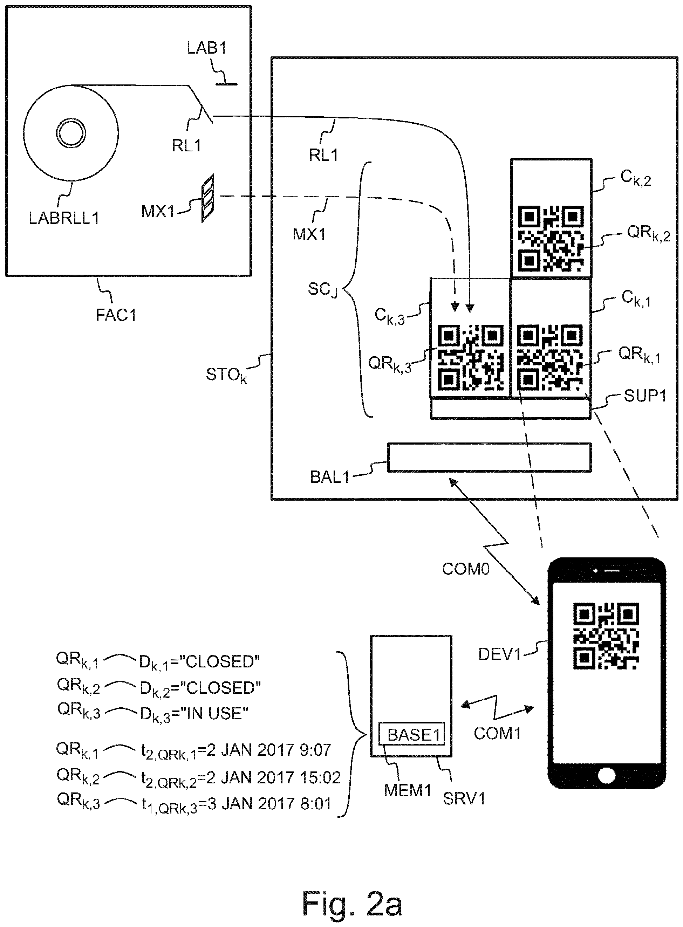

Referring to Fig. 2a, a plurality of items ITE1 may be labeled with the labels LAB1 at a labeling facility FAC1. The labeling facility FAC1 may provide separated release liner material RL1 as a by-product, in addition to the labeled items. The labeling facility FAC1 may provide label matrix material MX1 as a by-product (Fig. 15a). The labeling facility FAC1 may sometimes provide rejected adhesive laminate rolls LABRLL1.

The spent labelstock material RL1 and/or MX1 may be collected to containers C_{k,1}, C_{k,2}, C_{k,3}, ...

For example, release liner material RL1 may be collected to a container (e.g. C_{k,3}). For example, label matrix material MX1 may be collected to the same container (e.g. C_{k,3}) or to different container (e.g. C_{k,2}). The matrix MX1 may remain attached to the liner RL1 or the matrix MX1 may be separate from the liner RL1. The spent labelstock material may be collected to a container such that the container contains one or more types of materials. A container may be optionally associated with a material indicator, which indicates the composition of the material inside the container.

The containers used for collecting and transporting the spent labelstock material may be e.g. cardboard boxes, plastic bags, paper bags, bags made of natural fiber, plastic barrels, plastic boxes, and/or metal barrels.

The cardboard boxes are rectangular, which allows optimum use of the space of a storage. Filled cardboard boxes may be easily stored on top of each other. Preforms of cardboard boxes may be stored in the flat form before use, and the boxes may be assembled when needed. Yet, cardboard boxes may be easily flattened after use, so as to reduce the space needed for storing them.

When the container (e.g. a box) is moved from a storage to a vehicle, the weight of the spent labelstock material inside the container may be e.g. in the range of 200 kg to 600 kg, preferably in the range of 300 kg to 500 kg. The weight of a container (C_{1,1}) may be e.g. in the range of 100 kg to 1000 kg, preferably in the range of 300 kg to 500 kg. The expression "weight of the container" may refer to the sum of the weight of the empty container (=tare weight) and the weight of the contents of the container (= weight of the material).

The containers C_{k,1}, C_{k,2}, C_{k,3},.. are stored in a storage STOₖ, which is associated with the labeling facility FAC1. The storage STOₖ is located at a geographical location.

Each container may have a unique (i.e. different) code. For example, the container C_{k,1} may have a code QR_{k,1}, the container C_{k,2} may have a code QR_{k,2}, and the container C_{k,3} may have a code QR_{k,3}.

The code may be e.g. a two-dimensional barcode, a one-dimensional barcode, an alphanumerical code, or a code stored in a memory of an RFID tag. The code may be e.g. a QR code. The code may be e.g. a two-dimensional barcode, which comprises a visually recognizable image in addition to machine-readable black and white data pixels.

The method may comprise associating each container (or a stack of containers) with a different code. Each container (or a stack of containers) may be associated with a unique code. The codes may be e.g. randomly generated. The codes may be generated e.g. by using an algorithm. The method may comprise obtaining consecutive codes from a list. The codes may be generated randomly such that the probability of generating two identical codes may be negligible. The method may comprise rejecting a generated code is an identical code has previously been generated.

The codes are read at the labeling facility and/or at the storage STOₖ. by using a reading device DEV1. The reading device DEV1 may be a portable reading device. The reading device DEV1 may be e.g. a smartphone and/or a portable computer. The reading device DEV1 may be e.g. an industrial reading device.

The reading device DEV1 may comprise e.g. a camera for reading a machine-readable code (e.g. a one-dimensional or two-dimensional barcode). The reading device DEV1 may comprise e.g. an antenna for reading a code from an RFID tag. RFID means Radio frequency identification. The reading device DEV1 may comprise e.g. an antenna for reading a code from an NFC tag. NFC means near field communication.

A control system 1000 is configured to store data in a database BASE1 such that data associated with the code of a container can be accessed based on the code. Data associated with a container and stored in the database BASE1 is retrieved based on the code of said container. The database BASE1 may be implemented e.g. by using a database server SRV1. The data may be stored e.g. in a memory MEM1 of a server SRV1. The database BASE1 may be accessed e.g. via the Internet. The reader device DEV1 may communicate data to the database e.g. by using wireless communication COM1.

Each container C_{k,1}, C_{k,2}, C_{k,3} is associated with a status indicator D_{k,1}, D_{k,2}, D_{k,3}. The values of the status indicators are stored in the database BASE1 such that the value of a status indicator associated with a container may be accessed and/or changed based on the code of said container.

A status indicator D_{k,1} of a container may indicate e.g. that the container is in use (i.e. that the container "open"), or that the container has been closed (i.e. that the container is "full").

The database BASE1 comprises information, which indicates when the container has been closed. For example, the database BASE1 may comprise time data t_{2,QRk,1}, which indicates that the container associated with the code QR_{k,1} has been closed at 2 Jan 2017 9:07. For example, the database BASE1 may comprise time data t_{1,QRk,3}, which indicates that the container associated with the code QR_{k,3} has been taken into use at 3 Jan 2017 8:01.

Containers may be optionally stored in stacks. A stack (e.g. SC_{J}) may comprise e.g. two or more containers. The containers may be e.g. side by side and/or on top of each other. The containers of a stack may be of the same size or of different sizes. The stack may optionally comprise a pallet. In particular, the pallet may be an EURO pallet made of wood, and the dimensions may be substantially equal to 1200mm x 800 mm. The containers may be attached to each other e.g. by using cargo ties and/or by plastic film.

The weight of a container is measured by using a balance BAL1. The balance may be located e.g. in a labeling facility and/or in the storage. The container or the stack may be moved or lifted by using a pallet truck, and the pallet truck may comprise the balance BAL1. The container or the stack may be lifted e.g. by using a (hydraulic) lifting device attached to a vehicle VE1. The lifting device of the vehicle VE1 may comprise a balance BAL1 for weighing the containers and/or stacks.

The balance BAL1 may comprise a display for displaying a measured weight to the user. The balance may send a measured weight to a portable device DEV1 and/or to a server SRV1. The measured weight may be sent e.g. via a data link COM0. The measured weight may be communicated e.g. via a cable and/or by using wireless communication.

The reader device DEV1 may be optionally configured to ask further information about the container, e.g. one or more dimensions of the container. The portable device may be optionally configured to display one or more container types, and the user may provide user input by selecting a container type from among the displayed alternatives. The further information of the container may be stored in the database BASE1 such that it may be retrieved based on the code of the container.

A container may be optionally associated with a material indicator, which indicates the composition of the material inside the container. A user of a device DEV1 may specify the contents of a container e.g. when reading the code of the container. The user may e.g. select the value of a material indicator from among a plurality of material types when using the device DEV1 for reading the code of the container. The material indicators may be e.g. stored in a database BASE1 such that the material indicator of each container may be retrieved based on the unique code of the container. The material indicators may also be omitted e.g. when the type of the contents is detected at the collecting terminal and/or when substantially all containers of a given storage typically have substantially similar contents.

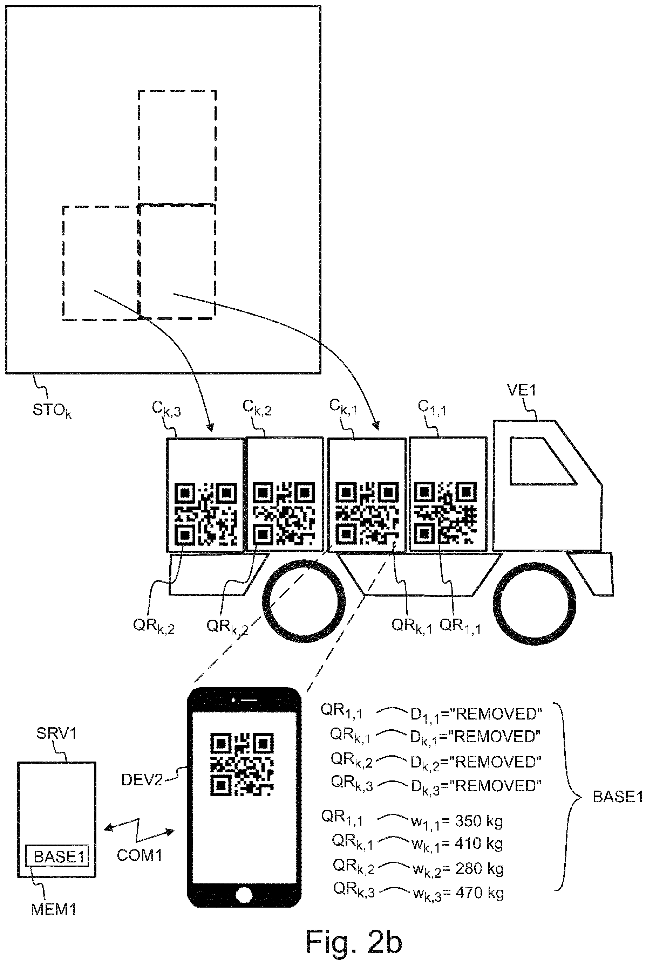

Referring to Fig. 2b, closed containers C_{k,1}, C_{k,2}, C_{k,3} are moved from the storage STOₖ to a vehicle VE1. The codes QR_{k,1}, QR_{k,2}, QR_{k,3} of the moved containers C_{k,1}, C_{k,2}, C_{k,3} may be read e.g. by using a reading device DEV2. Status indicators D_{k,1}, D_{k,2}, D_{k,3}, of the containers C_{k,1}, C_{k,2}, C_{k,3} may be set to indicate that the containers C_{k,1}, C_{k,2}, C_{k,3} have been removed from the storage STOₖ. The status indicators D_{k,1}, D_{k,2}, D_{k,3} may be stored in the database BASE1 such that the status indicator of each container may be retrieved based on the code of the container.

The control system may be configured to ask the weight of each container. The weight may be asked e.g. when a container is closed or when the container is moved to the vehicle. The container may be weighed e.g. by using a balance BAL1, which is installed in the storage or in the vehicle. The weighing result may be inputted to the database BASE1 e.g. manually by using a portable user device DEV1, DEV2. The weighing result may be inputted to the database BASE1 automatically. The device DEV1, DEV2 may be configured to display the measured weight to a user, wherein the user may accept or reject the displayed measurement result by using a user interface of the device. In case of a rejected measurement result, the system may ask the user to measure the weight again.

Each individual container may be weighed e.g. when it is moved from the storage to the vehicle. A stack may comprise one or more containers supported on a pallet. In particular, the stack may comprise one or more boxes supported on a pallet. The boxes may be optionally fastened to each other and/or to the pallet e.g. by using one or more cargo ties. The boxes may be optionally fastened to each other and/or to the pallet e.g. by wrapping them in plastic foil. The measured weight of each container is stored in the database such that the measured weight may be retrieved from the database based on the code of a container. For example, the container C_{k,1} may have a weight Wk,1.

The method may comprise providing a document, which comprises information about the weight of containers (C_{1,1},C_{1,2}) moved from a storage (STO₁) to the vehicle (VE1). The document may be e.g. in electronic form and/or printed on paper. The document may be used e.g. to prove that the weight of the cargo does not exceed the maximum capacity of the vehicle. The document may specify the amounts and the types of materials carried by the vehicle. The document may be presented e.g. to a police officer or to a customs officer, if needed.

The method may comprise providing a document, which comprises information about the measured weight of containers (C_{1,1}, C_{1,2}) transported in a vehicle (VE1). The method may comprise carrying the document in the vehicle (VE1) when transporting the containers (C_{1,1}, C_{1,2}).

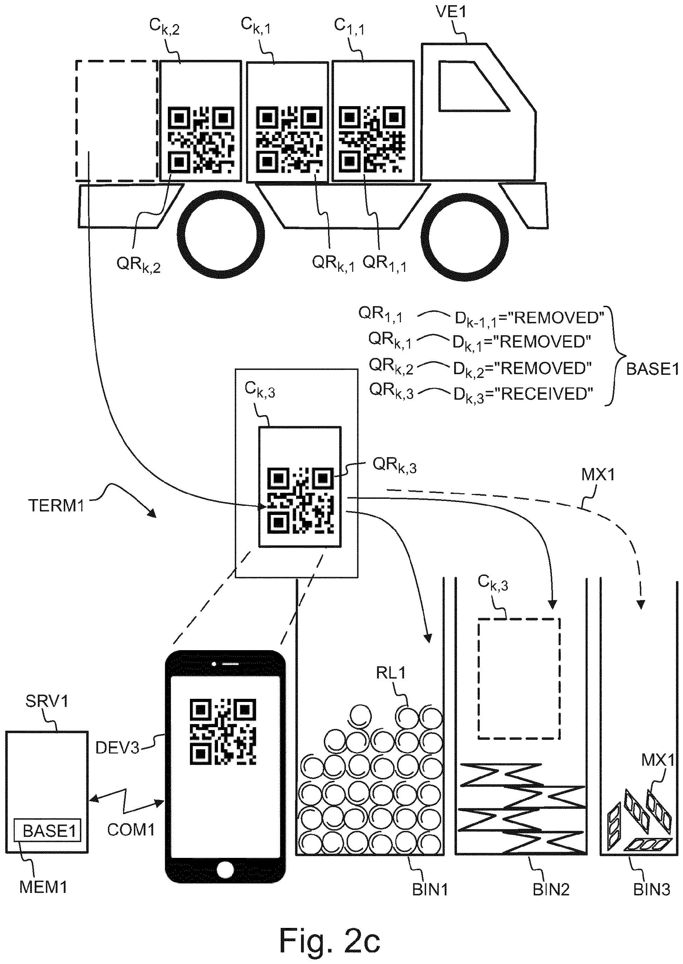

Referring to Fig. 2c, the containers are transported from the storages to a collecting terminal TERM1. The containers may be moved from the vehicle to the terminal TERM1. The code of each container may be read at the terminal. The status indicator of each received container (or stack) may be set to indicate that said container has been received at the terminal (e.g. D_{k,3} ="RECEIVED"). The status indicators may be stored in the database such that the status indicator of each container may be retrieved and changed based on the code of said container.

The contents of each container may be inspected at the terminal in order to determine a quality indicator for each container. The quality indicators may be stored in the database such the quality indicator of a container may be retrieved from the database based on the code of the container.

The cargo of the vehicle may be weighed at the terminal. The codes of the containers may be read at the terminal. The weights of individual containers may be retrieved from the database based on the codes. The total weight of the cargo of the vehicle may be compared with the sum of the weights of the individual containers (boxes) of the vehicle. The system may be configured to provide an indication if the total weight substantially deviates from the sum of the weights of individual containers. In that case the containers may be weighed individually also at the terminal in order to detect one or more abnormal containers having the deviating weight. The storage associated with an abnormal container and/or a user responsible for packing the abnormal container may be determined by reading the code of the abnormal container, and by determining the identity of the storage and/or user based on the code. An indication about the abnormal weight may be communicated as feedback to the user responsible for weighing the containers at the storage. The indication may be sent e.g. to a device (DEV1) of the user.

The quality of the contents of each container may be checked e.g. visually and/or by machine vision. The method may comprise determining a quality indicator for each container received at the terminal. For example, certain recycling applications require that the amount of plastic waste mixed with the release liner material should be low or negligible. For example, certain recycling applications require that the collected material consists essentially of a predetermined type of release liner material (e.g. Glassine), whereas the amount of other types (e.g. non-Glassine) should be low or negligible. For example, certain recycling applications require that the recycled release liner material should not contain roll cores. The method may comprise checking whether the container contains plastic waste in addition to (cellulose-based) release liner material. The quality indicator may be associated with the container by using the code of the container. The database may contain data, which associates each code with one or more responsible persons and/or users. A person responsible for packing the container may be retrieved from the database based on the code. The quality indicator may be communicated and/or displayed to the responsible user(s) by using the database and by using the code(s).

The method may comprise capturing one or more photographs of the contents of each container received at the collecting terminal. The photo of the contents of the container may be stored in the database such that it is associated with the code of the container. The photo(s) associated with the container may subsequently be retrieved from the database based on the code. The system 1000 may comprise a camera for capturing a photo of the contents. A user device DEV3 may be configured to capture a photo, and send it to the database BASE1 such that the photo of the contents of the container may be retrieved based on the code of the container.

If a received container contains several different types of materials, the contents of the container may be optionally processed. For example, the materials may be sorted manually and/or automatically. For example, the materials may be recognized e.g. by machine vision, and one or more un-wanted materials may be separated from the desired material manually and/or by using a robot.

The contents of the containers may be moved to a larger container BIN1. The container BIN1 may be called e.g. as a silo or storage bin. The capacity of the silo BIN1 may be e.g. in the range of 1000 kg to 1000000 kg of spent labelstock material. The contents of a container may be moved to the silo BIN1 e.g. when the quality of the contents if high enough and/or after un-wanted materials have been removed from the contents.

The empty containers may be collected to a second container BIN2 (silo or storage bin). The empty containers may be optionally compressed and/or shredded.

The terminal may optionally have one or more further containers (bins) BIN3 for collecting sorted spent labelstock material. For example, the terminal may have a first container BIN1 for collecting release liner material RL1, and the terminal may have a further container BIN3 for collecting matrix material MX1. The contents of a received container may be moved to the first bin BIN1 or to the further bin BIN3 e.g. based on visual evaluation or based on the material indicator associated with the code of said container.

Yet, the terminal may optionally comprise a further container (waste silo) for storing waste, which is separated from the contents of the received boxes. If the quality indicator of a container is lower than a predetermined limit, then the entire contents may be moved to the waste silo.

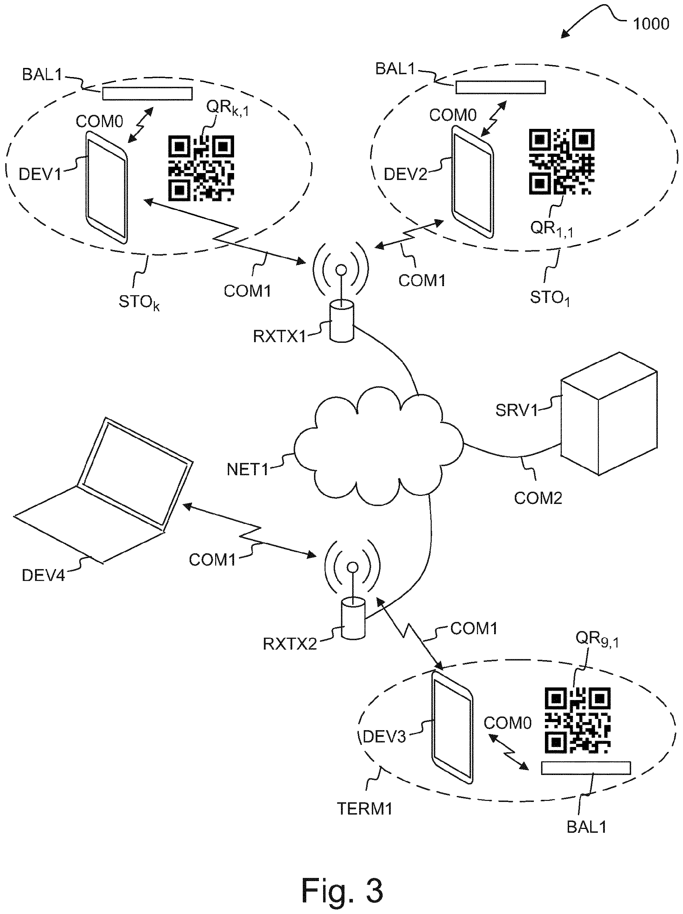

Referring to Fig. 3, a control system 1000 is configured to collect data from a plurality of reading devices, and to determine a collection plan based on the collected data.

The system 1000 may comprise a plurality of reader devices DEV1, DEV2, DEV3 for gathering data. The system 1000 may comprise a plurality of reader devices DEV1, DEV2, DEV3 capable of reading the code QR.

The system 1000 may comprise one or more base stations RXTX1, RXTX2 for providing wireless communication COM1 with devices DEV1, DEV2, DEV3, DEV4. The wireless communication COM1 may take place e.g. via a mobile communications network (e.g. 4G, LTE), via a wireless local area network (WLAN), and/or via Bluetooth^{™}.

The system SRV1 may comprise one or more servers SRV1 for storing and/or processing data. The system 1000 may comprise a server SRV1 for storing collected data. The system 1000 may comprise a server SRV1 for determining a prediction from the collected data. The system 1000 may comprise a server SRV1 for determining a collection plan based on the prediction. These tasks may be carried out by the same server or by different servers. The system 1000 may comprise at least one data processor, a memory including computer program code, the memory and the computer program code being configured to, with the at least one processor, cause the apparatus to perform one or more of the above-mentioned tasks.

The system 1000 may utilize a network NET1 for communicating data. The system 1000 may utilize the Internet for communicating data. The server SRV1 may be connected to the network NET1 e.g. via a communication link COM2.

The system 1000 may comprise display devices DEV1, DEV2, DEV3, DEV4 capable of displaying information to a user. The system 1000 may comprise portable reader devices DEV1, DEV2 which may be easily carried by a user.

A photo of contents of a container may also be captured at the labeling facility or at the storage. The photo may be stored in the database BASE1 such that it may be retrieved based on the code of the container.

The device DEV1, DEV2, DEV3, and/or DEV4 may comprise e.g. a touch screen for displaying information and for receiving user input. The device DEV1, DEV2, DEV3, and/or DEV4 may comprise e.g. a keypad and/or a mouse for receiving user input. A user may select a displayed option e.g. by touching a real key or a virtual key displayed on a touch screen. The device DEV1, DEV2, DEV3, DEV4, and/or SRV1 may comprise one or more data processors for executing computer program code. The device DEV1, DEV2, DEV3, DEV4, and/or SRV1 may be configured to carry out one or more steps of the material collecting method by executing the computer program code. The device DEV1, DEV2, DEV3, DEV4, and/or SRV1 may comprise a memory for storing data and/or computer program code. The device DEV1, DEV2, DEV3, and/or DEV4 may comprise a communication unit for communicating with the system 1000 e.g. via a local area network and/or via a mobile communications network.

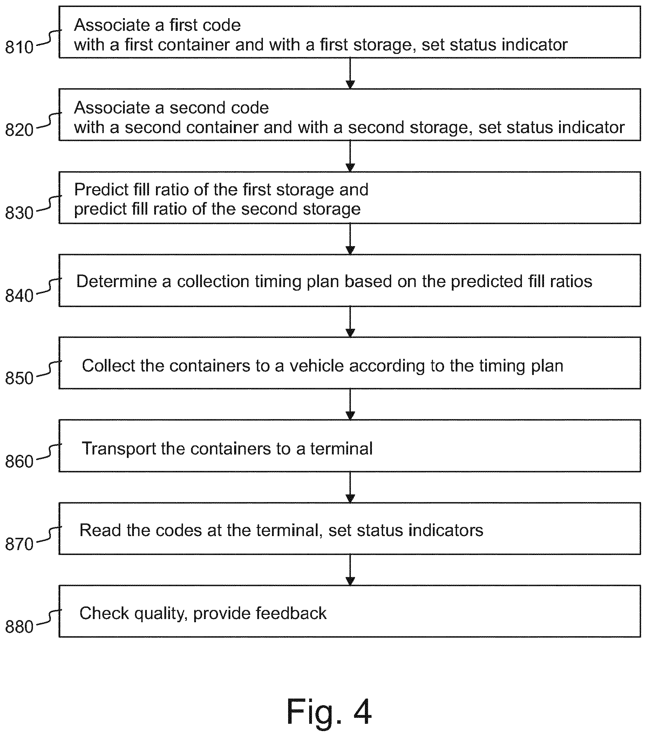

Fig. 4 shows, by way of example, method steps for handling spent labelstock material.

A first container (e.g. a box) is associated with a first code (step 810). The first code is also be associated with a first storage. A status indicator associated with the code is set to indicate the status of the first box.

The status indicator associated with a code may indicate e.g. one or more of the following: box is not yet in use, box is in use but not in storage, box is in use and in storage, box is closed after use, box is in storage, box is closed and in storage, closed box has been removed from the storage, box has been received at the collecting terminal, the material has been removed from the box and code has been terminated.

A second container (e.g. a second box) is associated with a second code (step 820). The second code is also be associated with a second (different) storage. A status indicator associated with the code is set to indicate the status of the second box.

The fill ratio of the first storage and the fill ratio of the second storage are predicted from collected data by using a prediction model (step 830).

A collection plan is determined from the predicted data (step 840). Determining the collection plan comprises determining a collection time plan. Determining the collection plan may comprise determining a collection route.

The boxes are moved from the storages to a collecting vehicle according to the collection plan (step 850).

The boxes are be transported to a terminal (step 860).

The codes of the transported boxes may be read at the collection terminal (step 870). The material may be removed from the boxes. The status indicators associated with the codes may be set to indicate that the boxes have been emptied and that codes have been terminated.

The method may further comprise checking the quality of the contents of the boxes at the collection terminal (step 880). The method may further comprise providing feedback to one or more users. The feedback may comprise e.g. information about the quality of contents of the boxes obtained from a storage. The feedback may comprise e.g. information about the amount of material obtained from a storage.

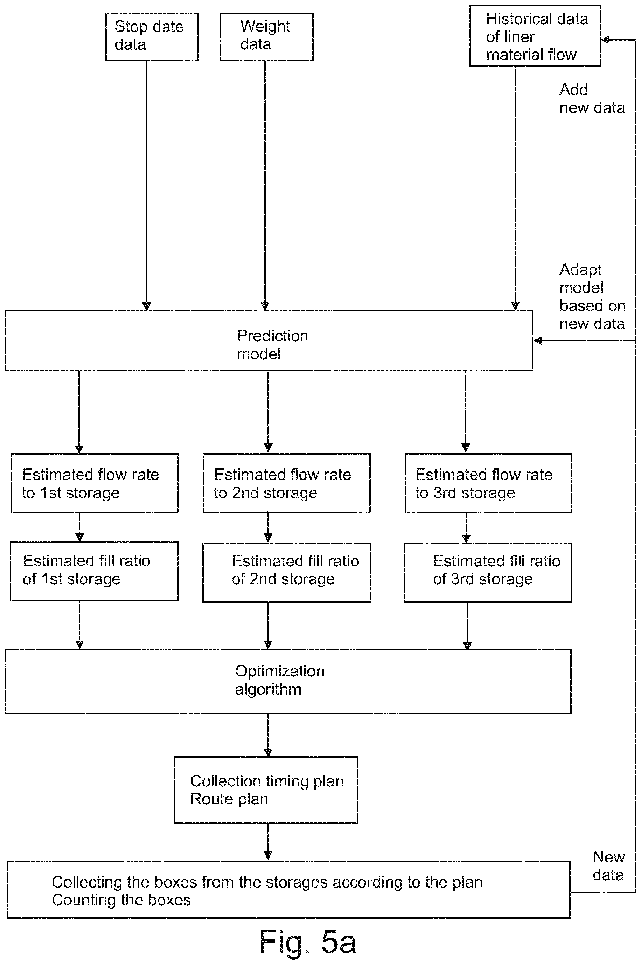

Referring to Fig. 5a, a collection timing plan is determined based on predicted fill ratios of storages belonging to the monitored group.

The fill ratio Rₖ(t) of each storage STOₖ may be e.g. in the range of 0% to 100%. The fill ratio 0% may indicate that no boxes are stored in the storage. The fill ratio 100% may indicate that the storage is completely full so that there is no allocated space left for further boxes. Reaching or exceeding the fill ratio of 100% may cause problems in the storage because additional spent material labelstock material needs to be stored in an inappropriate location. In extreme cases, operation of the labeling facility FAC1 needs to be stopped or useful release liner material needs to be dumped away as waste.

The collection timing plan and/or a collection route ROU1 may be determined such that the fill ratio of each relevant storage of the monitored group remains below 100% during a monitoring time period, at a predetermined degree of certainty. The monitoring time period may be e.g. a month or a year.

The collection route may indicate e.g. which ones of the storages of the monitored group should be visited on the determined collection day, which is indicated in the collection timing plan. The collection route may also indicate in which order a vehicle should visit the indicated storages. One or more collection vehicles subsequently collect the boxes from the storages according to the timing plan. The fill ratio of each visited storage may be substantially reduced when the closed boxes are moved from the storage to the vehicle. Some open boxes may remain in the storage such that they are not moved to the vehicle. Consequently, the filling factor of the storage may also be greater than 0% immediately after the visit of the vehicle.

The fill ratios of the storages are predicted by using a prediction model. The prediction model determines the fill ratios from input data. The input data comprises information about the status indicators of the containers. The input data comprises information about the times of changing the values of the status indicators.

The input data for the prediction model comprises stop time data S2ₖ(t) for each storage specified by the index k. The stop time data S2ₖ(t) indicates times t_{2,QRk} when a container (e.g. a box) associated with the storage STOₖ is closed. The stop time associated with a code means the time when the value of the status indicator associated with the code is changed to indicate that the container associated with the code has been closed. Each container has only one (final) closing time. For example, the following sequence of stop data may be gathered to the database by reading the code of each (filled) container when the container is closed in a predetermined storage k.

[2 January 8:33; 2 January 10:45; 2 January 15:10; 3 January 9:05; 3 January 10:55; 3 January 14:07; 3 January 15:55; 4 January 8:50; ....]

Based on the example sequence above, the flow rate of material into the storage may approximately correspond e.g. to 3 boxes per 24h.

A status indicator value of a container is changed when the container is closed. The method comprises predicting a fill ratio (Ri(t)) of a first storage (STO₁) and predicting a fill ratio (R₂(t)) of a second storage (STO₂) based on the status indicator values (D_{1,1}, D_{2,1}) of the containers.

The method comprises:
- setting a value of a status indicator (D_{1,1}) indicative of a status of the first container (C_{1,1}),
- setting a value of a status indicator (D_{2,1}) indicative of a status of the second container (C_{2,1}),
- storing the status indicator values (D_{1,1}, D_{2,1}) in a database (BASE1),
- predicting a fill ratio (Ri(t)) of the first storage (STO₁) and predicting a fill ratio (R₂(t)) of the second storage (STO₂) by using the status indicator values (D_{1,1}, D_{2,1}),
- determining a collection timing plan (TPLAN1) based on the predicted fill ratio (R₁(t)) of the first storage (STO₁) and based on the fill ratio (R₂(t)) of the second storage (STO₂), and
- collecting containers (C_{1,1}, C_{1,2}, C_{2,1}, C2,2) from the first storage (STO₁) and from the second storage (STO₂) according to the collection timing plan (TPLAN1).

Using the prediction model may comprise e.g. calculating an average number of boxes closed per unit time in a predetermined storage. Using the prediction model may comprise e.g. calculating a moving average number of boxes closed per unit time in a predetermined storage. Calculation of the average may comprise using different weighing coefficients. Using the prediction model may comprise e.g. calculating a moving weighted average number of boxes closed per unit time in a predetermined storage.

The method may comprise predicting the fill ratio (Ri(t)) of a storage (STO₁) by using a time delay (t_{2QR1,2}-t_{2QR1,1}) between closing time (t_{2QR1,1}) of a first container (C_{1,1}) associated with the storage (STO₁) and closing time (t_{2QR1,2}) of a second container (C_{1,2}) associated with the storage (STO₁).

Analysis of a longer monitoring period and a longer sequence may reveal e.g. that an increased number of boxes are typically closed during some weeks of a year. Analysis of a longer sequence may reveal e.g. that no boxes are closed during some weeks of the year.

The input data for the prediction model further comprises e.g. weight data W_{QRK}. Each box may be weighed e.g. when the box is closed. The symbol W_{QRk} may denote the weight of a box associated with a code QR in the storage k.

Using the prediction model may optionally comprise e.g. using historical recorded data of liner material flow into the storage. The historical data may indicate e.g. the number of boxes closed during each day of a previous year. The historical data may indicate e.g. that the number of boxes closed in December of the previous year was 100% higher than the number of boxes closed in November of said previous year.

The historical data may be updated e.g. each time when reading a code of a box. The historical data may be analyzed e.g. in order to find correlations between calendar time and the number of boxes closed during a given time period of a year. The historical data may be analyzed e.g. by statistical methods. The historical data may be analyzed e.g. by data mining.

The prediction model may be adapted based on new detected and/or measured data.

Estimated flow rates Fₖ(t) for each storage specified by the index k may be determined by using the prediction model. The flow rate Fₖ(t) may indicate e.g. the estimated mass flow of release liner material fed to the storage k. The flow rate Fₖ(t) may indicate e.g. the estimated number of containers, which are closed during a predetermined time period. The estimated flow rate Fₖ(t) may be e.g. in the range of 1 kg/24 h to 10000 kg/24 h. The capacity of each box may be e.g. in the range of 100 kg to 1000 kg. The estimated flow rate Fₖ(t) may be e.g. in the range of 0.01 box per 24h to 100 boxes per 24h.

The estimated fill ratio Rₖ(t) of each storage k is determined from the maximum capacity of each storage and from the estimated flow rates Fₖ(t).

The estimated fill ratio Rₖ(t) of each storage k is fed as input data for the optimization algorithm. The optimization algorithm determines an optimum collection time from the estimated fill ratios Rₖ(t), e.g. by using the geographical location of each storage, and by using one or more optimization criteria.

A user of the collecting system may be responsible for collecting boxes from a group of storages. The collecting system may be configured to determine the route and the timing plan such that the fill ratios of all storages of said group remain below 100%, with a predetermined degree of certainty.

The optimization algorithm may take into consideration the fill ratio of each storage which belongs to a group GRP1 of monitored storages.

The system 1000 may be configured to optimize the collection timing plan and/or the collecting route such that the risk of storage overfilling is kept below a predetermined level for each storage belonging to a predetermined group GRP1 of storages. Said group GRP1 may consist of M storages (i.e. M may denote the number of storages of said group). Said group GRP1 may consist e.g. of storages STO₁, STO₂, ... STOₖ, ... STO_{M}.

The optimization criteria may include e.g. one or more of the following:
- minimization of total transportation costs,
- minimization of fuel costs of the vehicle(s),
- minimization of total distance driven by the vehicle(s),
- minimization of working hours for driver(s) of the vehicle(s),
- keep risk of storage overfilling below a predetermined level,
- provide a substantially constant total flow of material to the collection term inal.

The boxes are subsequently collected from the storages to a vehicle according to the determined timing plan. The number of boxes moved from a storage to the collecting vehicle may be counted e.g. by reading the codes of the boxes. The read data may be added to the database and/or to the historical data. New detected and/or measured data may be added to the database and/or to the historical data when reading the codes.

The control system may also be configured to select an optimum collecting vehicle from a plurality of vehicles. For example, a first vehicle may have a lower load carrying capacity and a second vehicle may have a higher load carrying capacity.

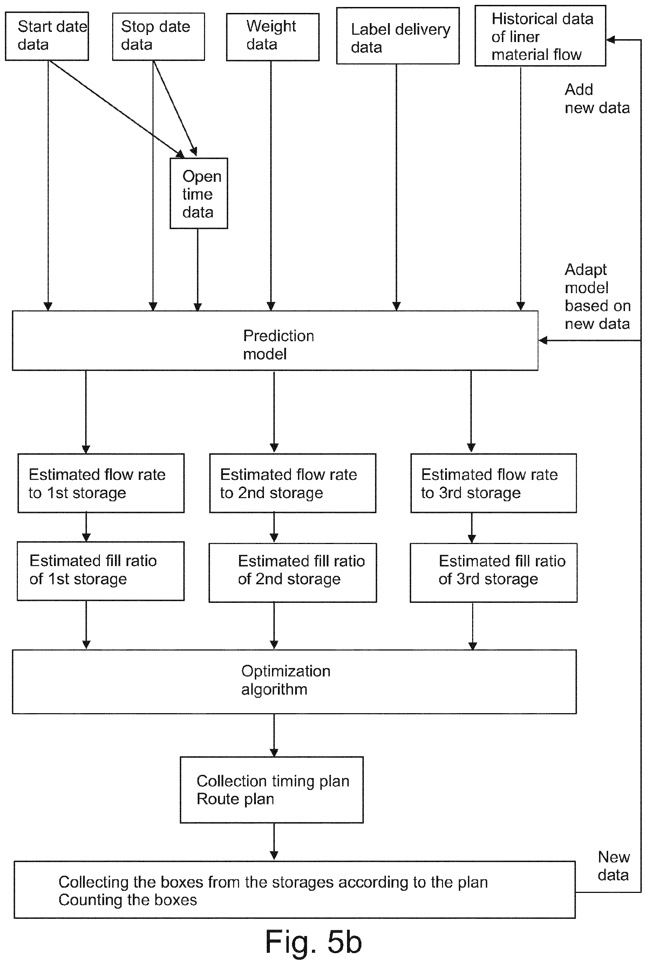

Referring to Fig. 5b, the input data for the prediction model may further comprise start data S1ₖ(t) for each storage specified by the index k. The start data S1ₖ(t) may indicate e.g. times t_{1,QRk} when a container associated with the storage k is taken into use. The start time associated with a code may mean the time when the value of the status indicator associated with the code is changed to indicate that the container associated with the code has been taken into use. Each container may have only one start time.

An estimate for material flow rate associated with a predetermined storage k rate may be determined also from the start data S1ₖ(t). The fill ratios of the storages are predicted by using a prediction model. The prediction model determines the fill ratios from input data. The input data for the model may further comprise the start data S1ₖ(t).

To the first approximation, the material flow rate of a storage may be inversely proportional to the time delay between consecutive start times. Using the prediction model may comprise e.g. calculating an average number of boxes taken into use per unit time in a predetermined storage. Using the prediction model may comprise e.g. calculating a moving average number of boxes taken unto use per unit time in a predetermined storage. Calculation of the average may comprise using different weighing coefficients. Using the prediction model may comprise e.g. calculating a moving weighted average number of boxes taken into use per unit time in a predetermined storage.

The method may comprise predicting the fill ratio (Ri(t)) of a storage (STO₁) by using on a time delay (t_{1QR1,2}-t_{1QR1,1}) between start time (t_{1QR1,1}) of filling of a first container (C_{1,1}) associated with the storage (STO₁) and start time (t_{1QR1,2}) of filling a second container (C_{1,2}) associated with the storage (STO₁).

The start data S1ₖ(t) and the stop data S2ₖ(t) associated with a storage k may be combined to provide interval data S12ₖ(t). The interval data S12ₖ(t) may indicate the difference S2ₖ(t)-S1ₖ(t) between the stop time and the start time associated with a box stored in the storage k. The interval data S12ₖ(t) may indicate the length of the time period between taking a box into use and closing said box. To the first approximation, the material flow rate of a storage may be inversely proportional to the length of the time period S2ₖ(t)-S1ₖ(t). The start data S1ₖ(t) and the stop data S2ₖ(t) may be inputted by reading the code QR of the box when it is taken into use and when it is closed. The start data S1ₖ(t) of a box may be associated with the stop data S2ₖ(t) of said box based on the code QR of said box.

Using the prediction model may comprise e.g. calculating material flow rates at different times t based on the lengths of the time periods. Using the prediction model may comprise e.g. calculating material flow rates at different times t based on a moving average of the lengths of the time periods.

The method may further comprise using label delivery data associated with a predetermined storage k. The label delivery data may comprise historical data about delivery dates and amount of label rolls LABRLL1 delivered to the labeling facility associated with the predetermined storage k. The label delivery data may comprise the schedule data about delivery dates and amount of label rolls LABRLL1 which are scheduled to be delivered (in the future) to the labeling facility associated with the predetermined storage k.

The method may comprise adjusting the prediction model by using the historical label delivery data and by using the historical data about the flow of liner material. A correlation between historical label delivery data and the historical data about the flow of liner material may be found e.g. by statistical analysis and/or by data mining. The model may be adapted based on the correlation. The adapted model may be used to predict the flow or liner material from historical data about delivery dates and from the schedule data.

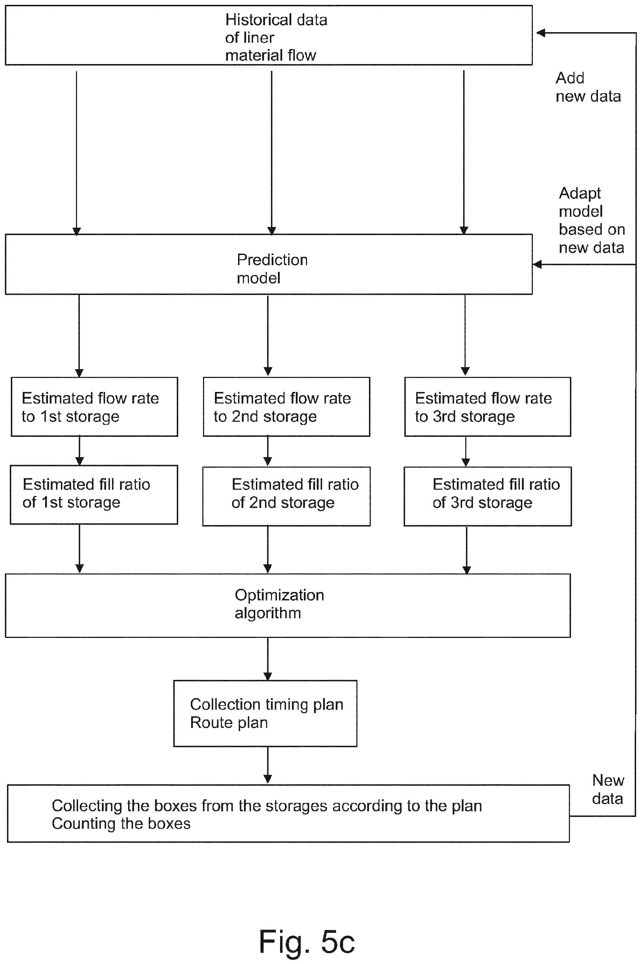

Referring to Fig. 5c, the prediction model may be determined by analyzing historical data about the fill ratios of the storages. This approach may be used e.g. when the correlation between calendar dates and material flows is high.

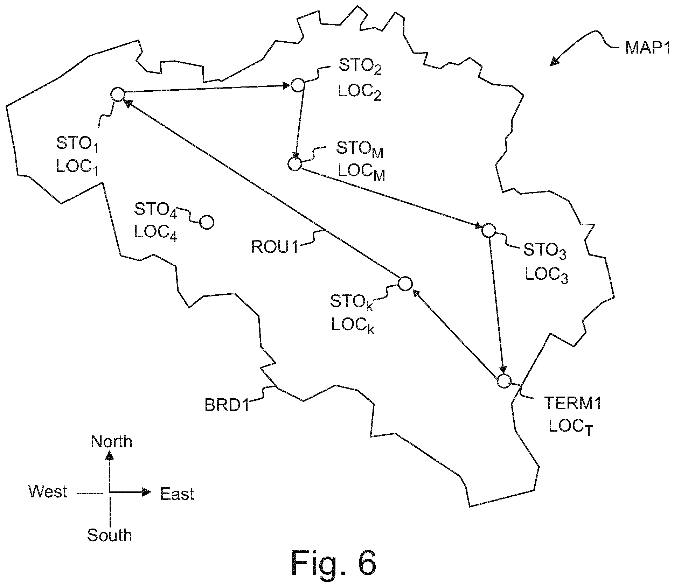

Referring to Fig. 6, the method may comprise determining a collecting route ROU1. The route ROU1 may be indicated e.g. on a geographical map MAP1. A vehicle may gather boxes from the storages on a determined collecting date (time) according to the route ROU1. The vehicle may transport the boxes to the collecting terminal TERM1. The route ROU1 may comprise waypoints, which indicate the locations of storages (e.g. STO₁, STO₂, ..., STOₖ, ..., STO_{M}). The route ROU1 may comprise (only) a subset of storages monitored by the system, i.e. the route may also sometimes bypass one or more storages (e.g. STO₄) if the control system has determined by using the optimization algorithm that it is not necessary to visit all storages on the determined pick-up date.

The total length of the route may be e.g. in the range of 10 km to 2000 km. The storages STO₁, STO₂, STOₖ STO_{M} and the terminal may be located in several different geographical locations (LOC₁. LOC₂, ..., LOC_{M}, LOC_{T}). The storages and the terminal may be e.g. in different districts, in different cities or even in different states. BRD1 may denote e.g. a border of a geographical area.

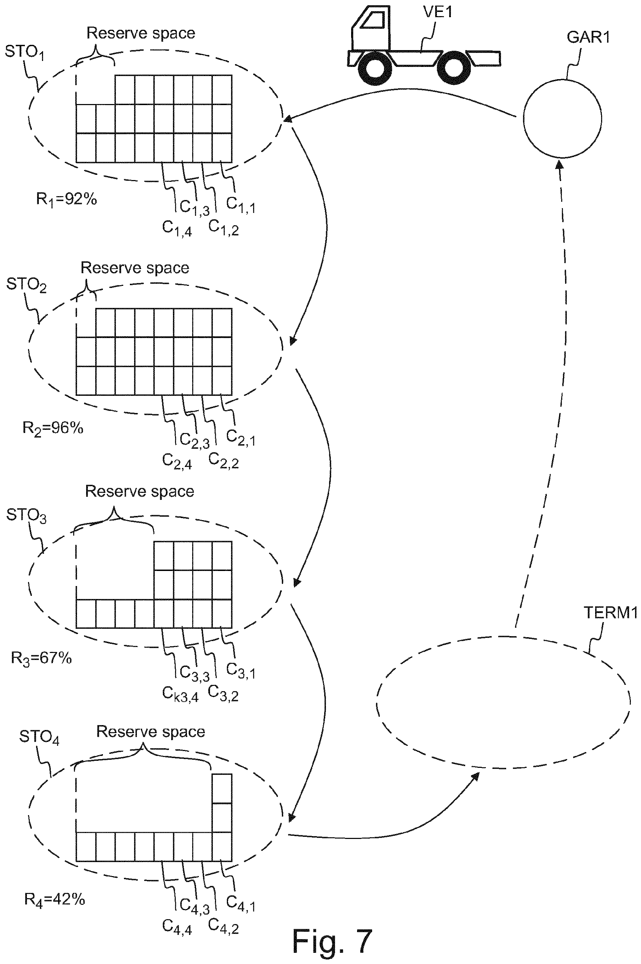

Fig. 7 illustrates fill ratios of four storages at the pick-up time. For example, the storage STO2 may be almost full, i.e. the fill ratio R₂ may be near 100% (e.g. equal to 96%) wherein the fill ratio of another storage STO₄ may be smaller than 50%, e.g. equal to 42%. The (relative) reserve space of the storage is equal to 1-fill ratio. The reserve space of the storage STO₂ may be e.g. equal to 4% (1-R₂).

Containers are moved from the storages to the vehicle VE1 at the pick-up time, and the containers are transported to the collecting terminal. The collecting route of the vehicle may start e.g. from a starting location GAR1, from the collecting terminal, or from one of the storages.

The fill ratio (R₁) of a first storage (e.g. STO₁) may be substantially higher than the fill ratio(R₃) of a second storage (e.g. STO₃). In an embodiment, the method may further comprise transferring one or more containers from a first storage to a second storage (e.g. from STO₁ to STO₃), and storing the transferred containers in the second storage before transferring the containers from the second storage to the collecting terminal TERM1. Containers obtained from the first storage may be stored in the second storage during a time period, which may be e.g. in the range of 2 days to 30 days. Using one or more storages as intermediate buffer storages may further optimize collecting of the spent labelstock material. The method may comprise setting a status indicator of a container to indicate that the container has been transferred from the first storage (e.g. STO₁) to the second storage (STO₃).

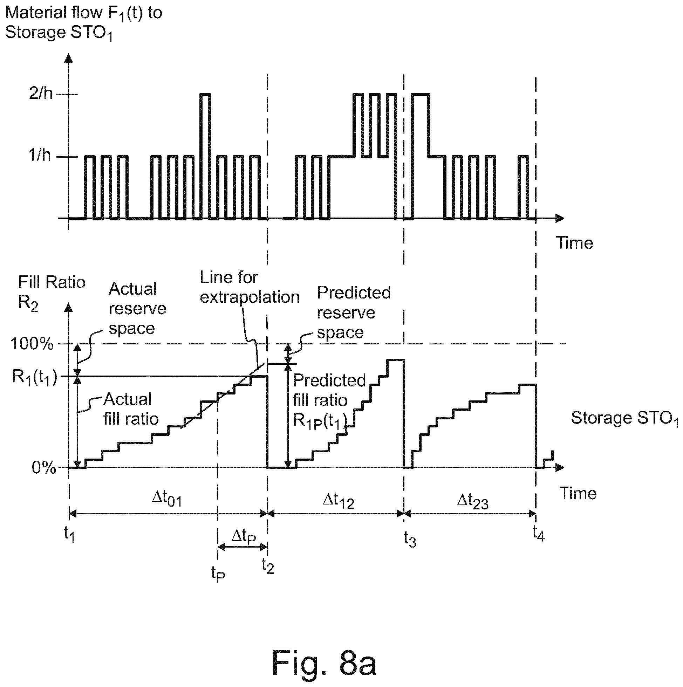

Fig. 8a shows a relationship between flow of material to a storage, and the fill ratio of said storage. The flow of material may be determined e.g. from the times when the status of a container is changed. The material flow rate may be temporally averaged by using an averaging window. The temporal width of the averaging window may be e.g. in the range of 1 h to 24 h. In this example, the averaged flow rate is e.g. in the range of 0 containers per hour to 2 containers per hour.

The fill ratio Ri(t) of the storage STO₁ may be an integral of the flow rate F(t). The fill ratio may increase according to the flow rate until the containers are moved away from the storage. The fill ratio may rapidly decrease close to a value, which is close zero at the pick-up times t₁, t₂, t₃, t₄.

The predicted fill ratio R_{1P}(t₂) of the storage STO₁ at the pick-up time t₂ may be determined at the time tp e.g. by extrapolation. For example, an extrapolation line may be fitted to historical data about the (actual) fill ratio Ri(t), which is available at the at the time tp. Δt_{P} denotes the interval between the prediction time tp and the pick-up time t₂. The intersection point of the extrapolation line and the time t₂ may define the predicted fill ratio R_{1P}(t₂) of the storage STO₁ at the pick-up time t₂.

Predicting the fill ratio may comprise extrapolating. Predicting the fill ratio may comprise fitting a line to historical data and/or to measured data, and determining a predicted fill ratio by extrapolation, by using the fitted line. Predicting the fill ratio may comprise fitting a curve to historical data and/or to measured data, and determining a predicted fill ratio by extrapolation, by using the fitted curve.

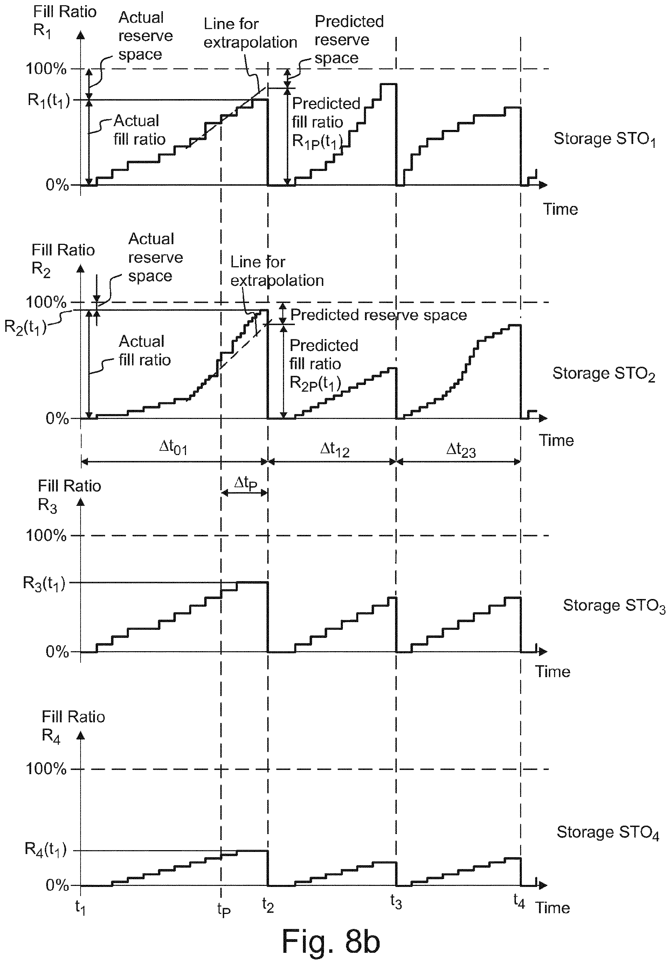

Referring to Fig. 8b, the predicted fill ratios R_{1P}(t₂), R_{2P}(t₂), R_{3P}(t₂), R_{4P}(t₂) of several storages STO₁, STO₂, STO₃, STO₄ may be determined based on historical data and/or based on information obtained by reading the codes.

The pick-up times t₂, t₃, t₄ may be determined based on the predicted fill ratios R_{1P}(t₂), R_{2P}(t₂), R_{3P}(t₂), R_{4P}(t₂) by using optimization. The optimization criterion may be e.g. one or more of the following:
The optimum pick-up time may be determined e.g.:
- based on the predicted fill ratios of the storages,
- based on minimizing the total cost/time of the pick-up vehicle operations,
- based on a desired flow of material to the collecting terminal,
   and/or
- based on a desired amount of material stored at the collecting terminal.

Statistical analysis of temporal evolution the fill ratios Ri(t), R₂(t), R₃(t) may indicate e.g. that the temporally averaged flow rate (e.g. Fi(t)) of material into a first storage (e.g. STO₁) may exhibit greater statistical variation than the temporally averaged flow rate (e.g. F₃(t)) of material into a second storage (e.g. STO₃). The predicted fill ratio (R_{P1}(t)) of the first storage (STO₁) may exhibit greater statistical uncertainty than the predicted fill ratio (R_{P3}(t)) of the second storage (STO₃). The method may comprise taking into account the statistical uncertainties of the predicted fill ratios (R_{P1}(t), R_{P3}(t)) when minimizing the risk of overfilling the storages (STO₁, STO₃).

The optimization may utilize e.g. Monte Carlo method and/or analytical optimization.

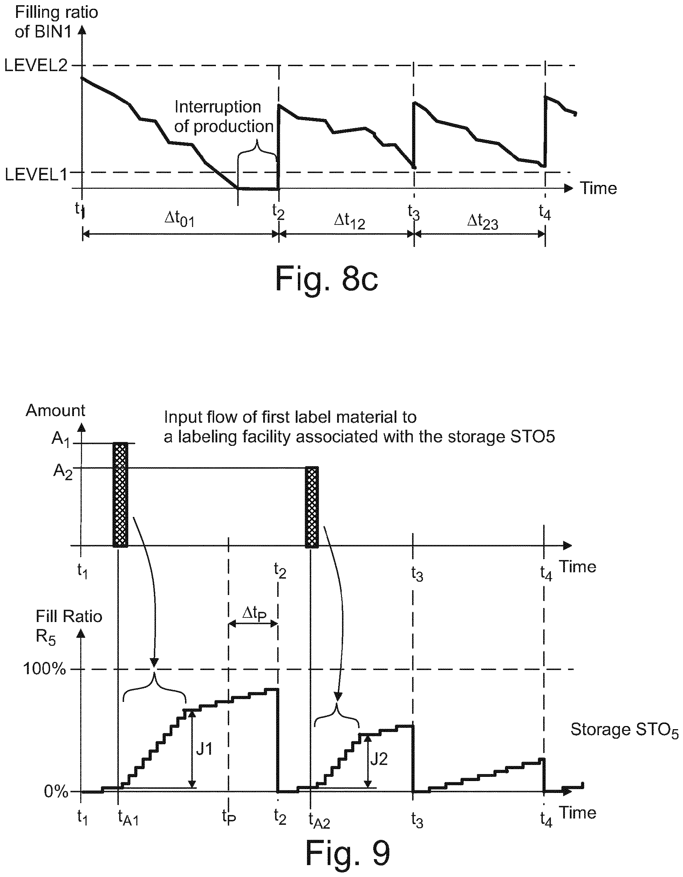

Referring to Fig. 8c, the fill ratio of a bin BIN1 of the collecting terminal TERM1 may vary according to the flow of material fed to the bin and according to the flow of material removed from the bin.

If the fill ratio decreases to zero, the production process utilizing the material may need to be stopped.

The bin BIN1 may have a lower level LEVEL1 and a higher level LEVEL2. The route and/or the pick-up time may be determined such that the fill level may remain in the range defined by the lower level LEVEL1 and the higher level LEVEL2.

Fig. 8c shows a simplified example where the material is collected only from the storages of Fig. 8b. In practice, material may be collected to the bin BIN1 from a high number of storages according to a plurality of different routes.

Referring to Fig. 9, the prediction model may optionally utilize the production planning data for predicting the fill ratio of the storage associated with the labeling facility. The production planning data may comprise e.g. data, which indicates the amounts of new labelstock delivered to the labeling site and/or the delivery dates of the new labelstock.

For example, an amount A₁ of a first label material may be delivered to the labeling facility at the time t_{A1}. An amount A₂ of first label material may be delivered to the labeling facility at the time t_{A2}. Analysis of the fill ratio may indicate a correlation between the amount of the first label material and the change of the fill ratio of a storage STO₅ associated with the labeling facility. Analysis of the data may indicate that delivery of the amount A₁ may cause a change J1 of the fill ratio, and delivery of the amount A₁ may cause a change J2 of the fill ratio. The correlation between the delivery data and the fill ratio may be utilize for determining the predicted fill ratio of the storage STO₅. The detected correlation may be utilized also in a situation where information about all label material delivered to the labeling facility is not available.

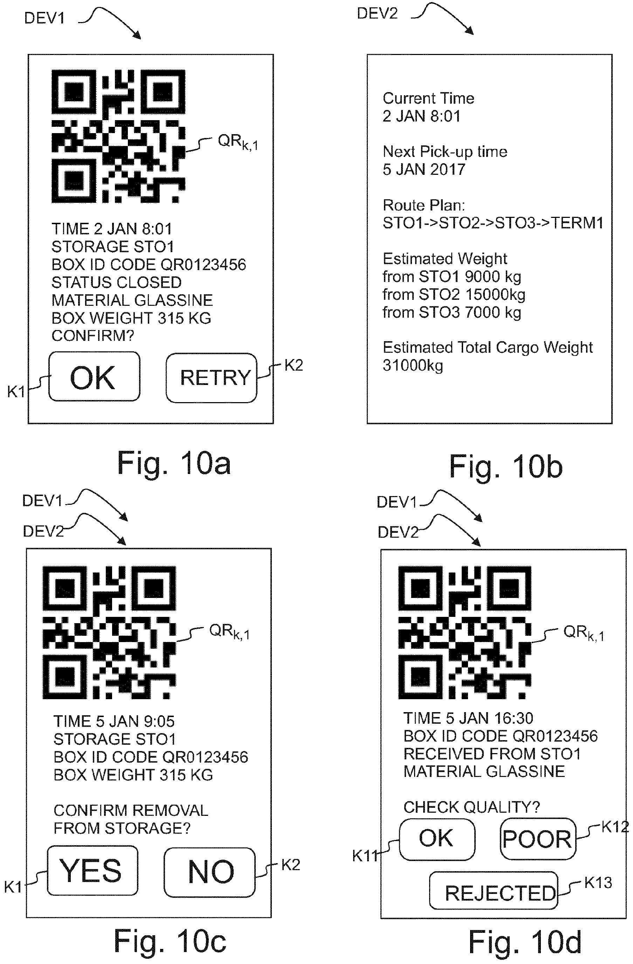

Fig. 10a shows a view, which may be displayed on a display of the reading device DEV1. The view may comprise an image of a read (captured) code **QR_{k,1}.** The view may comprise displayed data. The displayed data may indicate e.g. time of reading the code, identification of the location and/or storage, an alphanumeric code which corresponds to the read code **QR_{k,1}.** The displayed data may indicate a value of a status indicator associated with the code QR_{k,1} (e.g. closed). The displayed data may contain indication of the type of the material contained in the container (e.g. "Glassine"). The displayed data may indicate a measured weight. The measured weight may be associated with the code **QR_{k,1}.** The measured weight may be automatically communicated to the device DEV1 and/or to the server SRV1 and/or the user may manually feed a measured weight e.g. by using a user interface of the device DEV1. The measured weight may be automatically associated with the read code, and/or the measured weight may be associated with the read code if the user confirms the measured weight.

The user of the device DEV1 may confirm the displayed data e.g. by touching a key K1. Confirmed data may be stored in the database BASE1. Data indicating the time of the confirmation, an identification code of the device DEV1, and/or an identification code of the user may be stored in the database BASE1. The user of the device DEV1 may reject the displayed information e.g. by touching a key K2. If needed, the user may correct erroneous data e.g. by inputting correct data and/or by reading a code again.

Fig. 10b shows a displayed view for indicating determined pick-up time and route. The view may comprise data, which indicates the determined collection time plan, the determined route plan and/or estimated weight data. The view may be displayed e.g. on a display of a device DEV2 of a driver of the vehicle VE1. The device DEV2 may be portable and/or it may be attached to the vehicle VE1.

Fig. 10c shows a displayed view for confirming removal of a container from the storage. The view may be displayed on a display of the device DEV1 and/or on a display of the device DEV2. A user may confirm removal of a container from the storage e.g. by touching a key K1. The value of a status indicator associated with the code may be changed when the code is read and/or when the removal is confirmed. In an embodiment, reading the code of a container with the device DEV2 may automatically change the value of a status indicator associated with the code to indicate that the container is removed from the storage.

Fig. 10d shows a displayed view for inputting a value of a quality indicator. The view may be displayed on a display at a checkpoint of the collecting terminal. The view may be displayed e.g. on a display of a portable reading device DEV3 and/or on a display of a stationary device DEV4. The code of the container may be read at the collecting terminal e.g. by using a reading device DEV3.. A user may e.g. visually check and evaluate the contents of the container. The user may input a value of a quality indicator associated with the code e.g. by using a key K11, K12 and/or K13. The quality indicator may have e.g. values "OK", "poor", or "rejected". The inputted value may be stored in the database BASE1 such that it may be retrieved based on the code. The quality indicator may be communicated as feedback e.g. to the person who was responsible for filling the container.

For example, a quality indicator QIND_{k,1} associated with the code QR_{k,1} of a container C_{k,1} may be indicative of the detected quality of the contents of the first container C_{k,1}. The quality indicator QIND_{k,1} may have e.g. a value "good quality", "poor quality", or "unacceptable".

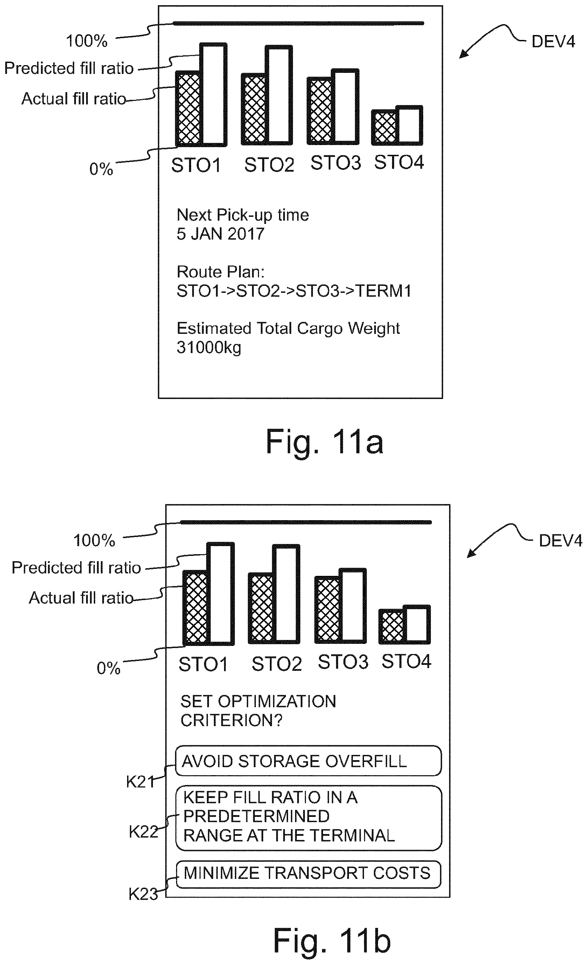

Fig. 11a shows a displayed view for indicating actual fill ratios of storages and predicted fill ratios of storages. The view may comprise data, which indicates the determined collection time and/or the determined collection route. The view may be displayed e.g. on a display of the device DEV1, DEV2, DEV3, and/or DEV4.

The method may comprise comprising communicating information about a fill ratio (e.g. R₁(t), R_{P1}(t)) of a storage (e.g. STO₁) to a user device DEV1, DEV2, DEV3, and/or DEV4.

Fig. 11b shows a displayed view for selecting an optimization criterion for the optimization algorithm. A user may select an optimization criterion e.g. by touching one of the keys K21, K22, K23.

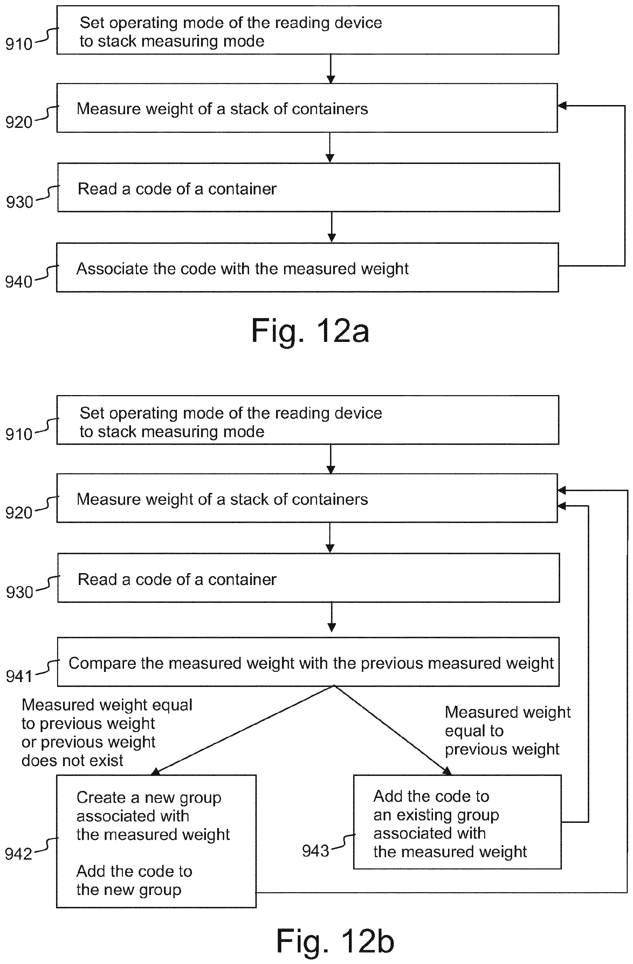

Referring to Fig. 12a, the method may comprise measuring the weight of a stack of containers.

A user may set the operating mode of a reading device (e.g. DEV1) into a stack weight recording mode (step 910). The weight of a stack may be measured by using a balance BAL1 (step 920). The code of a container of the stack may be read may using the device DEV1 (step 930). The code read by the device may be associated with the measured weight of the stack (step 940). The measured weight may be stored in the database BASE1 such that it may be retrieved based on the code. The user may subsequently read one or more codes of other containers of the same stack. All codes of the containers of a stack may be associated with the same measured weight of the stack. If the measured weight remains unchanged, the system may automatically determine that the read codes are associated with the same (first) stack.

After all codes of the same stack have been read, the user may measure the weight of the next (second) stack. The user may read one or more codes of containers of the second stack. All codes of the containers of the second stack may be associated with the same measured weight of the second stack.

Moving of the balance and/or moving the stack may cause a change of measured weight. The system 1000 may automatically determine that a change of the measured weight indicates the end of the reading of the codes of the first stack. The method may comprise monitoring the measured weight, wherein a change of the measured weight may be determined to indicate the end of reading codes of a first stack and/or to indicate the start of reading codes of a second stack.

It may be unlikely that two adjacent stacks would have exactly the same weight. The weight may be measured with a sufficient resolution such that the probability of measuring the same weight for two adjacent stacks may be low. The resolution of the balance may be e.g. smaller than or equal to 5kg, 1kg, or 0.1kg.

Referring to Fig. 12b, the method may comprise forming a group of codes such that each code of the group is associated with the same stack and with the same measured weight of the stack.

The creation of a new group for a next stack may be triggered by a change of measured weight. The new group may be formed as an association of codes, which have been generated earlier and attached to the containers of the next stack. The method may comprise detecting a change of weight (step 941). The code read in step 930 may be associated with the new changed weight. A new group for codes of a new stack may be formed after a change of weight has been detected (step 942). The code read in step 930 may be added to the new group.

The next weight may be read in step 920. A next code may be read (again) in step 930. If the measured weight remains stable, the code may be added to an existing group of codes associated with the stable weight of the stack (step 943). All codes of containers of the stack may be read and added to the same existing group.

The method comprises measuring the weight individual containers. The database may optionally simultaneously comprise the measured weight of an individual container and the measured weight of a stack, which comprises said individual container. The data may be stored in the database BASE1 such that a single code is associated with the weight of the container and the weight of the stack. The data may be stored such that codes of the other containers of a stack may be retrieved based on the code of a single container of said stack. The data may be stored such that the number of containers of the stack may be determined based on the code of a single container of said stack. The data may be stored such that it is clear whether a stored weigh value indicates the weight of an individual container or the weight of a stack.

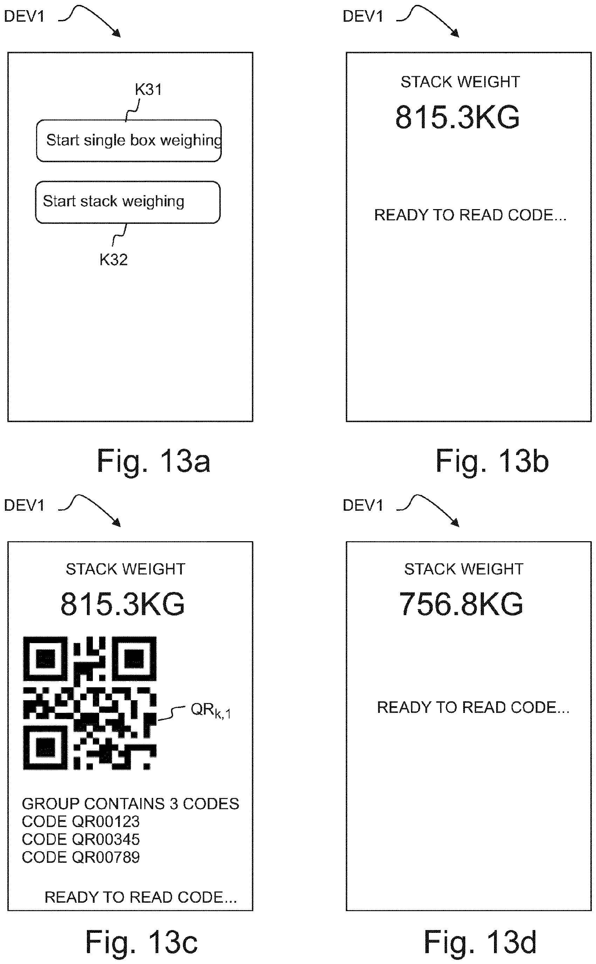

Referring to Fig. 13a, a user of the device DEV1 may start a weighing operation e.g. by touching a key K31 or K32. The device DEV1 may operate e.g. in stack weighing mode or in container weighing mode.

Referring to Fig. 13b, a measured weight may be displayed, and the device DEV1 may indicate that it is ready to read a code.

Referring to Fig. 13c, the device DEV1 may provide an indication, which indicates that a code has been read. For example, an image of a two-dimensional barcode may be displayed on the display of the device DEV1. For example, an alphanumeric representation of the barcode may be displayed on the display.

If several different codes have been read such that the measured weight has remained unchanged during the reading operations, the system 100 may determine that the codes belong to the group associated with the same measured weight.

Referring to Fig. 13d, the system 100 may detect a change of measured weight. Codes read after the change of the weight may be determined to belong to containers of a next different stack.

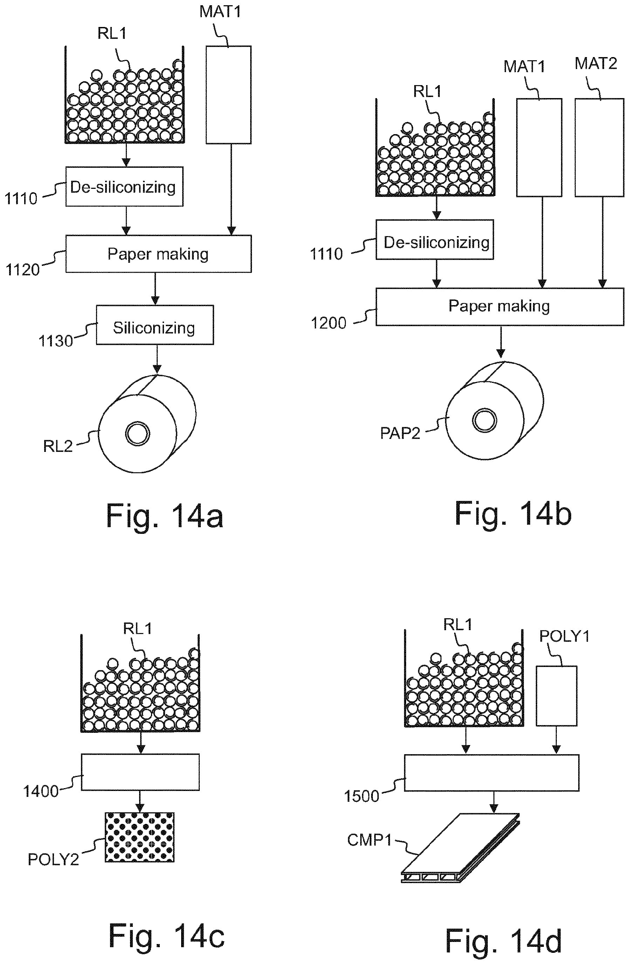

Figs. 14a to 14d illustrate how the collected material may be utilized. The spent labelstock material collected to the terminal TERM1 may be substantially clean and it may have high tensile strength. Consequently, the spent labelstock material may be suitable for use as reinforcing material in paper or in a polymer composite. Collected release liner material RL1 may be substantially clean and it may have high tensile strength. Collected matrix material MX1 may be substantially clean and it may have high tensile strength. The material RL1 and/or MX1 may be processed to provide reinforcing fibers and/or strips.

Referring to Fig. 14a, the spent labelstock material collected to the terminal TERM1 may be used e.g. for producing new release liner RL2. The method may comprise producing new release liner RL2 from the collected material RL1 and/or MX1 New release liner RL2 may be produced from collected release liner material RL1 and/or from collected matrix material MX1. The method may comprise de-siliconizing of the collected material (step 1110). The desiliconized material may be pulped and mixed with one or more other materials MAT1 to produce paper in a paper making process (step 1120). The produced paper may be coated with a release agent in step 1130 to produce new release liner RL2.

In particular, the collected material RL1 may comprise or consist essentially of Glassine paper. Glassine pulp may be produced from the collected material RL1 by de-siliconizing and pulping. The Glassine pulp may be mixed with virgin cellulose fibers MAT1 in order to produce new paper in the paper making process (step 1120).

Referring to Fig. 14b, the spent labelstock material collected to the terminal TERM1 may be used e.g. for producing recycled paper PAP2. The method may comprise producing recycled paper PAP2 from the collected material RL1 and/or MX1. Recycled paper PAP2 may be produced from collected release liner material RL1 and/or from the matrix material MX1. The method may comprise de-siliconizing of the collected material (step 1110). The desiliconized material may be pulped and mixed with other materials MAT1, MAT2 to produce paper PAP2 in a paper making process (step 1200).

In particular, the collected material RL1 may comprise or consist essentially of Glassine paper. Glassine pulp may be produced from the collected material RL1 by de-siliconizing and pulping. The Glassine pulp may be mixed with virgin cellulose fibers MAT1 and with other recycled paper fibers MAT2 to produce paper PAP2 in a paper making process (step 1200).

Referring to Fig. 14c, the spent labelstock material collected to the terminal TERM1 may be used e.g. for producing polymer material POLY2. The method may comprise producing polymer material POLY2 from collected material RL1 and/or MX1. The collected material RL1 and/or MX1 may comprise or consist essentially of polymer film material, e.g. plastic release liner material, plastic face stock material, plastic shrink film label material, and/or plastic wrap around label material. The collected material RL1 and/or MX1 may comprise or consist essentially of Polyethylene terephthalate (PET). The produced polymer material POLY2 may be subsequently used e.g. as packing material or as a raw material for producing polyurethane. The produced polymer material POLY2 may be used e.g. for producing a thermoformable polymer sheet.

Referring to Fig. 14d, spent labelstock material (e.g. RL1 and/or MX1) collected to the terminal TERM1 may be utilized as a raw material when producing a polymer composite product CMP1. The method may comprise mixing polymer material POLY1 with processed labelstock material. The mixture may be extruded or injected to a mold to form a product COMP1, which has a desired shape.

When producing polymer composite material, the collected material may comprise e.g. cellulose-based release liner material, polymer film release liner material, cellulose-based face stock material, polymer based face stock material, label matrix material produced by die-cutting a face stock layer. When producing polymer composite material, the collected material may comprise e.g. labelstock, which has wrong printing or low-grade printing.

Each container may be associated with a material indicator, which indicates the composition of the material inside the container. The collecting terminal TERM1 may comprise a first bin (e.g. BIN1) for collecting first material (e.g. Glassine) and a second bin (e.g. BIN3) for collecting second material (e.g. polymer material). When producing polymer composite material, the material indicators of the containers may be utilized for controlling and/or optimization of the material flows.

Referring to Fig. 15a, the collected spent labelstock material may comprise release liner material RL1 and label matrix MX1. The label matrix MX1 may comprise face stock material. The label matrix MX1 may be formed e.g. when the labels LAB1 are from a continuous face stock web by die-cutting.

Referring to Fig. 15b, collected spent labelstock material may comprise e.g. unused and/or partly used rolls of adhesive labels attached to release liner. The spent labelstock material may comprise rejected rolls. The labelstock material may be rejected at the labeling facility FAC1 e.g. due to wrong dimensions, due to wrong printing and/or due to low grade printing.

The method may comprise detecting the quality of the contents of the containers (e.g. C_{1,1}) received at the collecting terminal (TERM1). For example, a container containing cellulose-based release liner material (RL1) may sometimes contain impurity material in addition to the cellulose-based release liner material (RL1). The method may comprise detecting the relative amount of release liner material (RL1) in the contents of a container (e.g. C_{1,1}) and/or detecting the relative amount of impurity material(s) in the contents of the container (C₁,₁).

The method may comprise detecting the relative amount of release liner material (RL1) in the contents of a container (e.g. in the contents of a first container C_{1,1}). The method may comprise detecting whether the relative amount of release liner material (RL1) in the contents of a container (C_{1,1}) is lower than a predetermined limit (LIM1) or not. The quality indicator (QIND_{1,1}) of the container (C_{1,1}) may be determined based on the detected relative amount of release liner material (RL1) in the contents of the container. The predetermined limit (LIM1) may be e.g. in the range of 98% to 100%. The predetermined limit (LIM1) may be e.g. higher than or equal to 99%. The predetermined limit (LIM1) may be e.g. 100%. The method may comprise capturing one or more images of the contents of the container at the collecting terminal (TERM1), and determining the relative amount of release liner material (RL1) by analyzing the captured image(s). The method may comprise determining a relative surface area of release liner material (RL1) in the contents of the container by analyzing one or more captured images. The method may comprise detecting the presence of impurity material in the contents of the container by analyzing the captured image. The method may comprise determining a relative surface area of impurity material in the contents of the container by analyzing the one or more captured images. The control system 1000 may comprise camera for capturing an image of the contents of the container, and a data processing unit, which may be configured to determine relative surface area of release liner material (RL1) in the contents and/or relative surface area of impurity material in the contents, by analyzing one or more captured images. The release liner material (RL1) may have one or more predetermined optical properties, and one or more optical properties of an impurity material may be different from the optical properties of the release liner material (RL1). The release liner material (RL1) may have one or more predetermined colors, and the color of an impurity material may different from said one or more predetermined colors. The data processing unit may be configured to determine the relative surface area e.g. based on the optical properties. The data processing unit may be configured to determine the relative surface area e.g. based on the color(s) of the release liner material (RL1).

The method may comprise producing paper (PAP2) or composite material from the release liner material (RL1) of the contents of a container (C_{1,1}) in a situation where the relative amount of cellulose-based release liner material (RL1) in the contents of the container (C_{1,1}) is higher than or equal to the predetermined limit (LIM1). The predetermined limit (LIM1) may be e.g. in the range of 98% to 100%. The limit 100% may mean that the presence of impurity material is not allowed. The method may comprise rejecting the contents of a container (C_{1,1}) in a situation where analysis of the captured image of the container indicates the presence of impurity material. The method may comprise detecting whether a container (C_{1,1}) contains impurity material in addition to release liner material (RL1), and rejecting the contents of the container (C_{1,1}) at the terminal (TERM1) in a situation where the container (C_{1,1}) is detected to contain impurity material. The method may comprise producing paper (PAP2) or composite material (CMP1) from the release liner material (RL1) of the contents of a container (C_{1,1}) in a situation where the container (C_{1,1}) is not detected to contain impurity material.

The method may comprise producing paper (PAP2) or composite material (CMP1) from the release liner material (RL1) of the contents of a container (C_{1,1}) in a situation where the relative surface area of release liner material (RL1) is detected to be greater than or equal to a predetermined limit.

The method may comprise producing paper (PAP2) or composite material (CMP1) from the cellulose-based release liner material (RL1) of the contents of a container (C_{1,1}) in a situation where analysis of a capture image indicates that the relative surface area of release liner material (RL1) is detected to be greater than or equal to 98%

The cellulose-based release liner (RL1) may comprise silicone. A surface of the cellulose-based release liner (RL1) may comprise silicone. Material comprising silicone may be detected e.g. based on a combination of optical properties. Material comprising silicone may be detected e.g. based on a combination of a predetermined gloss and a predetermined color. A container may sometimes contain impurity material in addition to cellulose-based release liner material. The method may comprise checking at the terminal whether one side of a piece of collected material comprises silicone. Material which does not comprise silicone may be determined to be an impurity material, respectively.

The method comprises weighing the containers at the storages (STO₁, STO₂, STO₃, STO₄, STOₖ, ... STO_{M}). A first storage (STO₁) is located at a first location (LOC₁), and one or more containers (e.g. C_{1,1}, C_{1,2}) are weighed at the first location (LOC₁). A second storage (STO₂) is located at a second location (LOC₂), and one or more containers (e.g. C_{2,1}, C_{2,2}) are weighed at the second location (LOC₂). The measured weights of the weighed containers are stored in the database such that the measured weights can be retrieved from the database based on the codes of the weighed containers. Weighed containers (C_{1,1}, C_{1,2}) are transported from the first storage (STO₁) to a terminal (TERM1) according to the collection timing plan (TPLAN1), and weighed containers (e.g. C_{2,1}, C_{2,2}) are transported from the second storage (STO₂) to the terminal (TERM1) according to the collection timing plan (TPLAN1).

The method may comprise weighing the containers at the storages (STO₁, STO₂, STO₃, STO₄, STOₖ, ... STO_{M}), and also at the collecting terminal TERM1.

The collection timing plan (TPLAN1) is determined partly based on the measured weights of the containers. Information about the measured weights may also be used for optimizing the collection timing plan (TPLAN1). For example, the average weight of containers collected from a first storage (e.g. STO₁) may be substantially higher than the average weight of containers collected from a second storage (STO₂), in a situation where the size of the containers and the composition of the collected release liner material RL1 in the containers would be the same. Consequently, the total mass of release liner material RL1 collected from the first storage (STO₁) may be substantially higher than the total mass of release liner material RL1 collected from the second storage (STO₂), in a situation where the number of containers collected from the first storage would be equal to the number of containers collected from the second storage.

The method may comprise providing feedback to a user of a storage (e.g. STO₂) about the measured weights of the containers. The feedback may indicate e.g. the relative weight of the containers collected from the storage (e.g. STO₂), when compared with a reference weight of the containers. The reference weight may be e.g. the maximum weight of a container or an average weight of containers collected from a plurality of storages.

For the person skilled in the art, it will be clear that modifications and variations of the devices and the methods according to the present invention are perceivable. The figures are schematic. The particular embodiments described above with reference to the accompanying drawings are illustrative only and not meant to limit the scope of the invention, which is defined by the appended claims.

## Claims

1. A method for collecting spent labelstock material (RL1), the method comprising:
- storing a plurality of containers (C_{1,1}, C_{1,2}) in a first storage (STO₁) at a first location (LOC₁),
- storing a plurality of containers (C_{2,1}, C_{2,2}) in a second storage (STO₂) at a second location (LOC₂),
- associating a first code (QR_{1,1}) with a first container (C_{1,1}) and with the first storage (STO₁),
- associating a second different code (QR_{2,1}) with a second container (C_{2,1}) and with the second storage (STO₂),
- filling the first container (C_{1,1}) with spent labelstock material (RL1),
- filling the second container (C_{2,1}) with spent labelstock material (RL1),
- reading the code (QR_{1,1}) of the first container (C_{1,1}) and setting a value of a status indicator (D_{1,1}) indicative of a status of the first container (C_{1,1}) when the first container (C_{1,1}) is filled and is closed,
- reading the code (QR_{2,1}) of the second container (C_{2,1}) and setting a value of a status indicator (D_{2,1}) indicative of a status of the second container (C_{2,1}) when the second container (C_{2,1}) is filled and is closed,
- storing the status indicator values (D_{1,1}, D_{2,1}) and the times of changing the values of the status indicators in a database (BASE1),
- weighing one or more filled containers (C_{1,1}) at the first location (LOC₁),
- weighing one or more filled containers (C_{2,1}) at the second location (LOC₂),
- storing the measured weights (m_{1,1}, m_{1,2}) of the weighed containers (C_{1,1}, C_{1,2}) in a database (BASE1) such that the measured weights (m_{1,1},m_{1,2}) can be retrieved from the database (BASE1) based on the codes (QR_{1,1}, QR_{1,2}) of the weighed containers (C_{1,1}, C_{1,2}),
- predicting a fill ratio (Ri(t)) of the first storage (STO₁) and predicting a fill ratio (R₂(t)) of the second storage (STO₂) based on the status indicator values (D_{1,1}, D_{2,1}), said predicting comprising using information about the maximum capacity of each storage (STO₁, STO₂), and using information about the closing times (t_{2QR1,1}, t_{2QR1,2}) and weights of the containers (C_{1,1} C_{2,1}),
- determining a collection timing plan (TPLAN1) based on the predicted fill ratio (Ri(t)) of the first storage (STO₁) and based on the predicted fill ratio (R₂(t)) of the second storage (STO₂),
and
- transporting containers (C_{1,1}, C_{1,2}) from the first storage (STO₁) and transporting containers (C_{2,1}, C2,2) from the second storage (ST02) to a collection terminal (TERM1) according to the determined collection timing plan (TPLAN1).

2. The method of claim 1, comprising associating the first code (QR_{1,1}) with the first storage (STO₁) by reading the first code (QR_{1,1}) at the first location (LOC₁) by using a reader device (DEV1), and changing the value of the status indicator (D_{1,1}) of the first container (C_{1,1}) when the first code (QR_{1,1}) is read at the first location (LOC₁).

3. The method of claims 1 or 2, comprising transporting the first container (C_{1,1}) to a terminal (TERM1), reading the first code (QR_{1,1}) at the terminal (TERM1) by using a reader device (DEV3), and changing the value of the status indicator (D_{1,1}) of the first container (C_{1,1}) when the first code (QR_{1,1}) is read at the terminal (TERM1).

4. The method according to any of claims 1 to 3, comprising moving containers (C_{1,1}, C_{1,2}) from the first storage (STO₁) to a vehicle (VE1), reading codes (QR_{1,1}, QR_{1,2}) of the moved containers (C_{1,1}, C_{1,2}), and changing the status indicator values (D_{1,1}, D_{1,2}) of said containers (C_{1,1}, C_{1,2}) to indicate that the moved containers (C_{1,1}, C_{1,2}) have been removed from the first storage (STO₁).

5. The method according to any of claims 1 to 4, comprising predicting the fill ratio (Ri(t)) of the first storage (STO₁) based on a time delay (t_{2QR1,1}-t_{1QR1,1}) between start time (t_{1QR1,1}) of filling of the first container (C_{1,1}) and closing time (t_{2QR1,1}) of the first container (Ci,i), wherein the start time (t_{1QR1,1}) is determined by reading the code (QR_{1,1}) of the first container (C_{1,1}) when it is taken into use, and the closing time (t_{2QR1,1}) is determined by reading the code (QR_{1,1}) of the first container (C_{1,1}) when it is closed.

6. The method according to any of claims 1 to 5, comprising predicting the fill ratio (Ri(t)) of the first storage (STO₁) additionally based on a time delay (t_{1QR1,2}-t_{1QR1,1}) between start time (t_{1QR1,1}) of filling of the first container (C_{1,1}) and start time (t_{1QR1,2}) of filling of the second container (C_{1,2}), wherein the start time (t_{1QR1,1}) of the first container (C_{1,1}) is determined by reading the code (QR_{1,1}) of the first container (C_{1,1}) when it is taken into use, and the start time (t_{1QR1,2}) of the second container (C_{1,2}) is determined by reading the code (QR_{1,2}) of the second container (C_{1,2}) when it is taken into use.

7. The method according to any of claims 1 to 6, comprising predicting the fill ratio (Ri(t)) of the first storage (STO₁) based on a time delay (t_{2QR1,2}-t_{2QR1,1}) between closing time (t_{2QR1,1}) of the first container (C_{1,1}) and closing time (t_{2QR1,2}) of the second container (C_{1,2}), wherein the closing time (t_{2QR1,1}) of the first container (C_{1,1}) is determined by reading the code (QR_{1,1}) of the first container (C_{1,1}) when it is closed, and the closing time (t_{2QR1,2}) of the second container (C_{1,2}) is determined by reading the code (QR_{1,2}) of the second container (C_{1,2}) when it is closed.

8. The method according to any of claims 1 to 7, comprising predicting the fill ratio (Ri(t)) of the first storage (STO₁) additionally based on schedule data about delivery dates and amount of new label rolls (LABRLL1) which are scheduled to be delivered to the labeling facility (FAC1) associated with the first storage (STO₁).

9. The method according to any of claims 1 to 8, comprising providing a document, which comprises information about the measured weight of containers (C_{1,1}, C_{1,2}) transported in a vehicle (VE1), the method further comprising carrying the document in the vehicle (VE1) when transporting the containers (C_{1,1}, C_{1,2}).

10. The method according to any of claims 1 to 9, comprising reading codes of containers in the first storage (STO₁) by using a portable reading unit (DEV1, DEV2) at the first location (LOC₁).

11. The method according to any of claims 1 to 10, comprising detecting the quality of the contents of the first container (C_{1,1}) at the collecting terminal (TERM1), determining a quality indicator (QIND_{1,1}) indicative of the detected quality of the contents of the first container (C_{1,1}), and storing the quality indicator (QIND_{1,1}) in the database (BASE1) such that the quality indicator (QIND_{1,1}) can be retrieved from the database (BASE1) based on the code (QR_{1,1}) of the first container (C_{1,1}).

12. The method according to any of claims 1 to 11, wherein the first container (C_{1,1}) contains cellulose-based release liner material (RL1), the method comprising detecting whether the relative amount of cellulose-based release liner material (RL1) in the contents of a container (C_{1,1}) is lower than a predetermined limit (100%), and rejecting the contents of the container (C_{1,1}) at the terminal (TERM1) in a situation where the relative amount of cellulose-based release liner material (RL1) in the contents of the container (C_{1,1}) is detected to be lower than the predetermined limit (100%).

13. The method according to any of claims 1 to 12, comprising measuring a weight value by weighing one or more containers (C_{1,1},C_{1,2}) at the collection terminal (TERM1), retrieving one or more previously stored weight values from the database (BASE1) based on codes of the containers (C_{1,1},C_{1,2}), and comparing the measured weight value with the one or more weight values retrieved from the database (BASE1).

14. The method according to any of claims 1 to 13, wherein the code (QR_{1,1}) of the first container (C_{1,1}) is a two-dimensional barcode.

15. The method according to any of claims 1 to 14, comprising producing composite material (CMP1) from the collected labelstock material (RL1).

## Patentansprüche

1. Verfahren zum Sammeln verbrauchten Etikettenmaterials (RL1), wobei das Verfahren Folgendes umfasst:
- Lagern mehrerer Behälter (C_{1,1}, C_{1,2}) in einem ersten Lager (STO₁) an einem ersten Standort (LOC₁),
- Lagern mehrerer Behälter (C_{2,1}, C_{2,2}) in einem zweiten Lager (STO₂) an einem ersten Standort (LOC₂),
- Zuordnen eines ersten Codes (QR_{1,1}) zu einem ersten Behälter (C_{1,1}) und zu dem ersten Lager (STO₁),
- Zuordnen eines zweiten, anderen Codes (QR_{2,1}) zu einem zweiten Behälter (C_{2,1}) und zu dem zweiten Lager (STO₂),
- Füllen des ersten Behälters (C_{1,1}) mit verbrauchtem Etikettenmaterial (RL1),
- Füllen des zweiten Behälters (C_{2,1}) mit verbrauchtem Etikettenmaterial (RL1),
- Lesen des Codes (QR_{1,1}) des ersten Behälters (C_{1,1}) und Einstellen eines Wertes eines Statusindikators (D_{1,1}), der einen Status des ersten Behälters (C_{1,1}) angibt, wenn der erste Behälter (C_{1,1}) gefüllt und verschlossen wird,
- Lesen des Codes (QR_{2,1}) des zweiten Behälters (C_{2,1}) und Einstellen eines Wertes eines Statusindikators (D_{2,1}), der einen Status des zweiten Behälters (C_{2,1}) angibt, wenn der zweite Behälter (C_{2,1}) gefüllt und verschlossen wird,
- Speichern der Statusindikatorwerte (D_{1,1}, D_{2,1}) und der Zeiten der Veränderung der Werte der Statusindikatoren in einer Datenbank (BASE1),
- Wiegen eines oder mehrerer gefüllter Behälter (C_{1,1}) an dem ersten Standort (LOC₁),
- Wiegen eines oder mehrerer gefüllter Behälter (C_{2,1}) an dem zweiten Standort (LOC₂),
- Speichern der gemessenen Gewichte (m_{1,1}, m_{1,2}) der gewogenen Behälter (C_{1,1}, C_{1,2}) in einer Datenbank (BASE1) derart, dass die gemessenen Gewichte (m_{1,1}, m_{1,2}) basierend auf den Codes (QR_{1,1}, QR_{1,2}) der gewogenen Behälter (C_{1,1}, C_{1,2}) von der Datenbank (BASE1) abgerufen werden können,
- Vorhersagen eines Füllverhältnisses (Ri(t)) des ersten Lagers (STO₁) und Vorhersagen eines Füllverhältnisses (R₂(t)) des zweiten Lagers (STO₂) basierend auf den Statusindikatorwerten (D_{1,1}, D_{2,1}), wobei das Vorhersagen das Verwenden von Informationen über die maximale Kapazität jedes Lagers (STO₁, STO₂) und das Verwenden von Informationen über die Verschlusszeitpunkte (_{t2QR1,1}, t_{2QR1,2}) und der Gewichte der Behälter (C_{1,1}, C_{1,2}) umfasst,
- Bestimmen eines Sammelzeitplans (TPLAN1) basierend auf dem vorhergesagten Füllverhältnis (Ri(t)) des ersten Lagers (STO₁) und basierend auf dem vorhergesagten Füllverhältnis (R₂(t)) des zweiten Lagers (STO₂),
und
- Transportieren von Behältern (C_{1,1}, C_{1,2}) von dem ersten Lager (STO₁) und Transportieren von Behältern (C_{2,1}, C_{2,2}) von dem zweiten Lager (STO₂) zu einer Sammelendstation (TERM1) gemäß dem bestimmten Sammelzeitplan (TPLAN1).

2. Verfahren nach Anspruch 1, das Zuordnen des ersten Codes (QR_{1,1}) zu dem ersten Lager (STO₁) durch Lesen des ersten Codes (QR_{1,1}) an dem ersten Standort (LOC₁) mit Hilfe eines Lesegeräts (DEV1) und das Ändern des Wertes des Statusindikators (D_{1,1}) des ersten Behälters (C_{1,1}), wenn der erste Code (QR_{1,1}) an dem ersten Standort (LOC₁) gelesen wurde, umfassend.

3. Verfahren nach Anspruch 1 oder 2, das Transportieren des ersten Behälters (C_{1,1}) zu einer Endstation (TERM1), das Lesen des ersten Codes (QR_{1,1}) an der Endstation (TERM1) mit Hilfe eines Lesegeräts (DEV3) und das Verändern des Wertes des Statusindikators (D_{1,1}) des ersten Behälters (C_{1,1}), wenn der erste Code (QR_{1,1}) an der Endstation (TERM1) gelesen wurde, umfassend.

4. Verfahren nach einem der Ansprüche 1 bis 3, das Bewegen von Behältern (C_{1,1}, C_{1,2}) von dem ersten Lager (STO₁) zu einem Fahrzeug (VE1), das Lesen von Codes (QR_{1,1}, OR_{1,2}) der bewegten Behälter (C_{1,1}, C_{1,2}) und das Verändern der Statusindikatorwerte (D_{1,1}, D_{2,1}) der Behälter (C_{1,1}, C_{1,2}) zwecks Anzeigens, dass die bewegten Behälter (C_{1,1}, C_{1,2}) aus dem ersten Lager (STO₁) entfernt wurden, umfassend.

5. Verfahren nach einem der Ansprüche 1 bis 4, das Vorhersagen des Füllverhältnisses (Ri(t)) des ersten Lagers (STO₁) basierend auf einer Zeitverzögerung (t_{2QR1,1} - t_{1QR1,1}) zwischen einem Startzeitpunkt (t_{1QR1,1}) des Füllens des ersten Behälters (C_{1,1}) und einem Verschlusszeitpunkt (t_{2QR1,1}) des ersten Behälters (C_{1,1}) umfassend, wobei der Startzeitpunkt (t_{1QR1,1}) durch Lesen des Codes (QR_{1,1}) des ersten Behälters (C_{1,1}) bei seiner Ingebrauchnahme bestimmt wird und der Verschlusszeitpunkt (t_{2QR1,1}) durch Lesen des Codes (QR_{1,1}) des ersten Behälters (C_{1,1}) bei seinem Verschluss bestimmt wird.

6. Verfahren nach einem der Ansprüche 1 bis 5, das das Vorhersagen des Füllverhältnisses (Ri(t)) des ersten Lagers (STO₁) zusätzlich basierend auf einer Zeitverzögerung (t_{1QR1,2} - t_{1QR1,1}) zwischen dem Startzeitpunkt (t_{1QR1,1}) des Füllens des ersten Behälters (C_{1,1}) und dem Startzeitpunkt (t_{1QR1,2}) des Füllens des zweiten Behälters (C_{1,2}) umfassend, wobei der Startzeitpunkt (t_{1QR1,1}) des ersten Behälters (C_{1,1}) durch Lesen des Codes (QR_{1,1}) des ersten Behälters (C_{1,1}) bei seiner Ingebrauchnahme bestimmt wird und der Startzeitpunkt (t_{1QR1,2}) des zweiten Behälters (C_{1,2}) durch Lesen des Codes (QR_{1,2}) des zweiten Behälters (C_{1,2}) bei seiner Ingebrauchnahme bestimmt wird.

7. Verfahren nach einem der Ansprüche 1 bis 6, das Vorhersagen des Füllverhältnisses (Ri(t)) des ersten Lagers (STO₁) basierend auf einer Zeitverzögerung (t_{2QR1,2} - t_{2QR1,1}) zwischen dem Verschlusszeitpunkt (t_{2QR1,1}) des ersten Behälters (C_{1,1}) und dem Verschlusszeitpunkt (t_{2QR1,2}) des zweiten Behälters (C_{1,1}) umfassend, wobei der Verschlusszeitpunkt (t_{2QR1,1}) des ersten Behälters (C_{1,1}) durch Lesen des Codes (QR_{1,1}) des ersten Behälters (C_{1,1}) bei seinem Verschluss bestimmt wird und der Verschlusszeitpunkt (t_{2QR1,2}) des zweiten Behälters (C_{1,2}) durch Lesen des Codes (QR_{1,2}) des zweiten Behälters (C_{1,2}) bei seinem Verschluss bestimmt wird.

8. Verfahren nach einem der Ansprüche 1 bis 7, das Vorhersagen des Füllverhältnisses (Ri(t)) des ersten Lagers (STO₁) zusätzlich basierend auf Planungsdaten über Lieferzeitpunkte und Mengen neuer Etikettenrollen (LABRLL1) umfassend, deren Lieferung an die Etikettierungseinrichtung (FAC1), die dem ersten Lager (STO₁) zugordnet ist, geplant ist.

9. Verfahren nach einem der Ansprüche 1 bis 8, das Bereitstellen eines Dokuments umfassend, das Informationen über das gemessene Gewicht von Behältern (C_{1,1}, C_{1,2}) umfasst, die in einem Fahrzeug (VE1) transportiert werden, wobei das Verfahren ferner das Mitführen des Dokuments in dem Fahrzeug (VE1) beim Transportieren der Behälter (C_{1,1}, C_{1,2}) umfasst.

10. Verfahren nach einem der Ansprüche 1 bis 9, das Lesen von Codes von Behältern in dem ersten Lager (STO₁) mit Hilfe einer transportablen Leseeinheit (DEV1, DEV2) an dem ersten Standort (LOC₁) umfassend.

11. Verfahren nach einem der Ansprüche 1 bis 10, das Erkennen der Qualität der Inhalte des ersten Behälters (C_{1,1}) an der Sammelendstation (TERM1), das Bestimmen eines Qualitätsindikators (QIND_{1,1}), der die erkannte Qualität der Inhalte des ersten Behälters (C_{1,1}) angibt, und das Speichern des Qualitätsindikators (QIND_{1,1}) in der Datenbank (BASE1) derart, dass der Qualitätsindikator (QIND_{1,1}) basierend auf dem Code (QR_{1,1}) des ersten Behälters (C_{1,1}) von der Datenbank (BASE1) abgerufen werden kann, umfassend.

12. Verfahren nach einem der Ansprüche 1 bis 11, wobei der erste Behälter (C_{1,1}) abziehbares Trägermaterial (RL1) auf Zellulosebasis enthält, wobei das Verfahren das Erkennen, ob die relative Menge an abziehbarem Trägermaterial (RL1) auf Zellulosebasis in den Inhalten eines Behälters (C_{1,1}) geringer als eine festgelegte Grenze (100 %) ist, und das Ausstoßen der Inhalte des Behälters (C_{1,1}) an der Endstation (TERM1) in einer Situation, in der die relative Menge an abziehbarem Trägermaterial (RL1) auf Zellulosebasis in den Inhalten des Behälters (C_{1,1}) als geringer als die festgelegte Grenze (100%) erkannt wird, umfasst.

13. Verfahren nach einem der Ansprüche 1 bis 12, das Messen eines Gewichtswertes durch Wiegen eines oder mehrerer Behälter (C_{1,1}, C_{1,2}) an der Sammelendstation (TERM1), das Abrufen eines oder mehrerer zuvor gespeicherter Gewichtswerte von der Datenbank (BASE1), basierend auf Codes der Behälter (C_{1,1}, C_{1,2}), und das Vergleichen des gemessenen Gewichtswertes mit dem einen oder den mehreren von der Datenbank (BASE1) abgerufenen Gewichtwerten umfassend.

14. Verfahren nach einem der Ansprüche 1 bis 13, wobei der Code (QR_{1,1}) des ersten Behälters (C_{1,1}) ein zweidimensionaler Barcode ist.

15. Verfahren nach einem der Ansprüche 1 bis 14, das Produzieren von Verbundmaterial (CMP1) aus dem gesammelten Etikettenmaterial (RL1) umfassend.

## Revendications

1. Procédé destiné à la collecte de déchets d'un matériau pour étiquettes (RL1), le procédé comprenant le fait de:
- stocker un certain nombre de conteneurs (C_{1,1}, C_{1,2}) dans un premier entrepôt (STO₁) à un premier endroit (LOC₁),
- stocker un certain nombre de conteneurs (C_{2,1}, C_{2,2}) dans un deuxième entrepôt (STO₂) à un deuxième endroit (LOC₂),
- associer un premier code (QR_{1,1}) à un premier conteneur (C_{1,1}) et au premier entrepôt (STO₁),
- associer un deuxième code différent (QR_{2,1}) à un deuxième conteneur (C_{2,1}) et au deuxième entrepôt (STO₂),
- remplir le premier conteneur (C1,1) avec des déchets d'un matériau pour étiquettes (RL1),
- remplir le deuxième conteneur (C_{2,1}) avec des déchets d'un matériau pour étiquettes (RL1),
- lire le code (QR_{1,1}) du premier conteneur (C_{1,1}) et établir une valeur d'un indicateur d'état (D_{1,1}) qui témoigne d'un état du premier conteneur (C_{1,1}) lorsque le premier conteneur (C_{1,1}) est rempli et est fermé,
- lire le code (QR_{2,1}) du deuxième conteneur (C_{2,1}) et établir une valeur d'un indicateur d'état (D_{2,1}) qui témoigne d'un état du deuxième conteneur (C_{2,1}) lorsque le deuxième conteneur (C_{2,1}) est rempli et est fermé,
- mettre en mémoire les valeurs des indicateurs d'états (D_{1,1}, D_{2,1}) et les moments qui correspondent à un changement des valeurs des indicateurs d'états dans une base de données (BASE1),
- peser un ou plusieurs conteneurs remplis (C_{1,1}) au premier endroit (LOC₁),
- peser un ou plusieurs conteneurs remplis (C_{2,1}) au deuxième endroit (LOC₂),
- mettre en mémoire les poids mesurés (m_{1,1}, m_{1,2}) des conteneurs pesés (C_{1,1}, C_{1,2}) dans une base de données (BASE1) d'une manière telle que les poids mesurés (m_{1,1}, m_{1,2}) peuvent être extraits de la base de données (BASE1) en se basant sur les codes (QR_{1,1}, QR_{1,2}) des conteneurs pesés (C_{1,1}, C_{1,2}),
- prédire un taux de remplissage (Ri(t)) du premier entrepôt (STO₁) et prédire un taux de remplissage (R₂(t)) du deuxième entrepôt (STO₂) en se basant sur les valeurs des indicateurs d'états (D_{1,1}, D_{2,1}), lesdites prédictions comprenant le fait d'utiliser des informations qui concernent la capacité maximale de chaque entrepôt (STO₁, STO₂) et le fait d'utiliser des informations qui concernent les moments qui correspondent à une fermeture (t_{2QR1,1}, t_{2QR1,2}) et les poids des conteneurs (C_{1,1}, C_{1,2}),
- déterminer un plan quant à la cadence de la collecte (TPLAN1) en se basant sur le taux de remplissage (Ri(t)) du premier entrepôt (STO₁) qui a été prédit et en se basant sur le taux de remplissage (R₂(t)) du deuxième entrepôt (STO₂) qui a été prédit, et
- transporter des conteneurs (C_{1,1}, C_{1,2}) à partir du premier entrepôt (STO₁) et transporter des conteneurs (C_{2,1}, C_{2,2}) à partir du deuxième entrepôt (STO₂) jusqu'à un terminal de collecte (TERM1) en conformité avec le plan quant à la cadence de la collecte (TPLAN1) qui a été déterminé.

2. Procédé selon la revendication 1, qui comprend le fait d'associer le premier code (QR_{1,1}) au premier entrepôt (STO₁) par l'intermédiaire d'une lecture du premier code (QR_{1,1}) au premier endroit (LOC₁) en utilisant un dispositif de lecture (DEV1) et d'une modification de la valeur de l'indicateur d'état (D_{1,1}) du premier conteneur (C_{1,1}) lorsque le premier code (QR_{1,1}) est lu au premier endroit (LOC₁).

3. Procédé selon la revendication 1 ou 2, qui comprend le fait de: transporter le premier conteneur (C_{1,1}) jusqu'à un terminal (TERM1), lire le premier code (QR_{1,1}) au terminal (TERM1) en utilisant un dispositif de lecture (DEV3), et modifier la valeur de l'indicateur d'état (D_{1,1}) du premier conteneur (C_{1,1}) lorsque le premier code (QR_{1,1}) est lu au terminal (TERM1).

4. Procédé conformément à l'une quelconque des revendications 1 à 3, qui comprend le fait de: déplacer des conteneurs (C_{1,1}, C_{1,2}) depuis le premier entrepôt (STO₁) jusqu'à un véhicule (VE1), lire des codes (QR_{1,1}, QR_{1,2}) des conteneurs mis en mouvement (C_{1,1}, C_{1,2}), et modifier les valeurs des indicateurs d'états (D_{1,1}, D_{1,2}) des conteneurs en question (C_{1,1}, C_{1,2}) afin d'indiquer que les conteneurs mis en mouvement (C_{1,1}, C_{1,2}) ont été retirés du premier entrepôt (STO₁).

5. Procédé conformément à l'une quelconque des revendications 1 à 4, qui comprend le fait de: prédire le taux de remplissage (Ri(t)) du premier entrepôt (STO₁) en se basant sur un décalage temporel (t_{2QR1,1} - t_{1QR1,1}) entre le moment correspondant au démarrage (t_{1QR1,1}) du remplissage du premier conteneur (C_{1,1}) et le moment correspondant à la fermeture (t_{2QR1,1}) du premier conteneur (C_{1,1}), dans lequel le moment correspondant au démarrage (t_{1QR1,1}) est déterminé par l'intermédiaire d'une lecture du code (QR_{1,1}) du premier conteneur (C_{1,1}) lorsque ce dernier est utilisé, et le moment correspondant à la fermeture (t_{2QR1,1}) est déterminé par l'intermédiaire d'une lecture du code (QR_{1,1}) du premier conteneur (C_{1,1}) lorsque ce dernier est fermé.

6. Procédé conformément à l'une quelconque des revendications 1 à 5, qui comprend le fait de: prédire le taux de remplissage (Ri(t)) du premier entrepôt (STO₁) en se basant en outre sur un décalage temporel (t_{1QR1,2} - t_{1QR1,1}) entre le moment correspondant au démarrage (t_{1QR1,1}) du remplissage du premier conteneur (C_{1,1}) et le moment correspondant au démarrage (t_{1QR1,2}) du remplissage du deuxième conteneur (C_{1,2}), dans lequel le moment correspondant au démarrage (t_{1QR1,1}) du premier conteneur (C_{1,1}) est déterminé par l'intermédiaire d'une lecture du code (QR_{1,1}) du premier conteneur (C_{1,1}) lorsque ce dernier est utilisé, et le moment correspondant au démarrage (t_{1QR1,2}) du deuxième conteneur (C_{1,2}) est déterminé par l'intermédiaire d'une lecture du code (QR_{1,2}) du deuxième conteneur (C_{1,2}) lorsque ce dernier est utilisé.

7. Procédé conformément à l'une quelconque des revendications 1 à 6, qui comprend le fait de: prédire le taux de remplissage (Ri(t)) du premier entrepôt (STO₁) en se basant sur un décalage temporel (t_{2QR1,2} - t_{2QR1,1}) entre le moment correspondant à la fermeture (t_{2QR1,2}) du premier conteneur (C_{1,1}) et le moment correspondant à la fermeture (t_{2QR1,1}) du deuxième conteneur (C_{1,2}), dans lequel le moment correspondant à la fermeture (t_{2QR1,1} ) du premier conteneur (C_{1,1}) est déterminé par l'intermédiaire d'une lecture du code (QR_{1,1}) du premier conteneur (C_{1,1}) lorsque ce dernier est fermé, et le moment correspondant à la fermeture (t_{2QR1,2}) du deuxième conteneur (C_{1,2}) est déterminé par l'intermédiaire d'une lecture du code (QR_{1,2}) du deuxième conteneur (C_{1,2}) lorsque ce dernier est fermé.

8. Procédé conformément à l'une quelconque des revendications 1 à 7, qui comprend le fait de: prédire le taux de remplissage (Ri(t)) du premier entrepôt (STO₁) en se basant en outre sur des données de programmation qui concernent des dates de livraison et une quantité de nouveaux rouleaux d'étiquettes (LABRLL1) qui doivent être programmés pour être livrés à l'établissement d'étiquetage (FAC1) associé au premier entrepôt (STO₁).

9. Procédé conformément à l'une quelconque des revendications 1 à 8, qui comprend le fait de fournir un document qui reprend des informations concernant le poids mesuré des conteneurs (C_{1,1}, C_{1,2}) qui sont transportés dans un véhicule (VE1), le procédé comprenant en outre le fait d'emporter le document dans le véhicule (VE1) au cours du transport des conteneurs (C_{1,1}, C_{1,2}).

10. Procédé conformément à l'une quelconque des revendications 1 à 9, qui comprend le fait de lire des codes de conteneurs dans le premier entrepôt (STO₁) par le fait d'utiliser une unité de lecture portable (DEV1, DEV2) au premier endroit (LOC₁).

11. Procédé conformément à l'une quelconque des revendications 1 à 10, qui comprend le fait de: détecter la qualité du contenu du premier conteneur (C_{1,1}) au terminal de collecte (TERM1), déterminer un indicateur de qualité (QIND_{1,1}) qui témoigne de la qualité du contenu du premier conteneur (C_{1,1}) qui a été détectée ; et mettre en mémoire l'indicateur de qualité (QIND_{1,1}) dans la base de données (BASE1) d'une manière telle que l'indicateur de qualité (QIND_{1,1}) peut être extrait de la base de données (BASE1) en se basant sur le code (QR_{1,1}) du premier conteneur (C_{1,1}).

12. Procédé conformément à l'une quelconque des revendications 1 à 11, dans lequel le premier conteneur (C_{1,1}) contient une matière à base de cellulose faisant office de pellicule antiadhésive (RL1), le procédé comprenant la détection du fait de savoir si la quantité relative de la matière à base de cellulose faisant office de pellicule antiadhésive (RL1) dans le contenu d'un conteneur (C_{1,1}) est inférieure à une limite prédéterminée (100 %), et le rejet du contenu du conteneur (C_{1,1}) au terminal (TERM1) dans une situation dans laquelle la quantité relative de la matière à base de cellulose faisant office de pellicule antiadhésive (RL1) dans le contenu d'un conteneur (C_{1,1}) est détectée comme étant inférieure à une limite prédéterminée (100 %).

13. Procédé conformément à l'une quelconque des revendications 1 à 12, qui comprend le fait de: mesurer une valeur de poids en pesant un ou plusieurs conteneurs (C_{1,1}, C_{1,2}) au terminal de collecte (TERM1), extraire une ou plusieurs valeurs de poids préalablement mises en mémoire, à partir de la base de données (BASE1) en se basant sur des codes des conteneurs (C_{1,1}, C_{1,2}), et comparer la valeur de poids qui a été mesurée auxdites une ou plusieurs valeurs de poids qui ont été extraites à partir de la base de données (BASE1).

14. Procédé conformément à l'une quelconque des revendications 1 à 13, dans lequel le code (QR_{1,1}) du premier conteneur (C_{1,1}) est un code-barres en deux dimensions.

15. Procédé conformément à l'une quelconque des revendications 1 à 14, qui comprend le fait de produire un matériau composite (CMP1) à partir de déchets du matériau pour étiquettes (RL1) qui a été collecté.
